# EUROPEAN PATENT SPECIFICATION

(11) **EP 3 146 861 B1**
(45) Date of publication and mention of the grant of the patent: **29.08.2018**
(21) Application number: 16188620.5
(22) Date of filing: 13.09.2016
(51) Int. Cl.: A41H 43/04

(54) **BONDING DEVICE**
BONDINGVORRICHTUNG
DISPOSITIF DE LIAISON

(30) Priority: 18.09.2015 JP 2015184582
(43) Date of publication of application: 29.03.2017
(73) Proprietor: Brother Kogyo Kabushiki Kaisha, Nagoya-shi, Aichi-ken 467-8561 (JP)
(72) Inventor: SHIBATA, Itaru, Aichi-ken, 467-8562 (JP)
(74) Representative: J A Kemp

(56) References cited:
- CN-U- 204 588 272
- JP-A- 2010 222 758

## Description

### BACKGROUND

The present invention relates to a bonding device.

A bonding device is known that bonds a flexible first sheet, such as a cloth, onto a second sheet. The first sheet has a long length. A bonding device described in Japanese Laid-Open Patent Publication No. 2010-222758 includes an upper roller and a lower roller. The upper roller can move between a contact position and a separated position. The contact position is a position in which the upper roller can be in contact with the lower roller. The separated position is a position in which the upper roller is separated from the lower roller. A point at which the upper roller and the lower roller can be in contact with each other is a pressure bonding point. The bonding device performs a bonding process that feeds the first sheet and the second sheet while pressure-bonding the first sheet to the second sheet at the pressure bonding point using the upper roller and the lower roller that are in the contact position. Before the bonding process is performed, a user arranges one end portion of each of the first sheet and the second sheet on an upstream side, in a feed direction, of the pressure bonding point between the upper roller and the lower roller that are in the separated position. Further, the user arranges the other end portion of each of the first sheet and the second sheet on a downstream side, in the feed direction, of the pressure bonding point.

### SUMMARY

With the above-described bonding device, after the bonding process is complete, it is necessary for the user to manually cut the first sheet having the long length. After being cut, the end portion of the first sheet is in a free state further on the downstream side in the feed direction than the pressure bonding point. When the user arranges the second sheet for the next bonding process, there is a case in which a hand of the user or the second sheet becomes entangled with the end portion of the first sheet and the first sheet deviates from a feed path. In this case, the user needs to manually redo the arrangement operation of the first sheet, and thus operation efficiency deteriorates.

It is an object of the present invention to provide a bonding device capable of improving efficiency of an arrangement operation of a first sheet.

A bonding device according to the present invention includes a feed mechanism that includes an upper roller and a lower roller. The upper roller is disposed on an upper side of a first sheet in a position where the first sheet is overlaid on an upper surface of a second sheet via an adhesive. The upper roller is adapted to rotate around a first axis line extending in a direction orthogonal to a feed direction of the first sheet and the second sheet. The lower roller is disposed on a lower side of the second sheet. The lower roller is opposed to the upper roller. The lower roller is adapted to rotate around a second axis line extending in parallel to the first axis line. The feed mechanism is adapted to feed the first sheet and the second sheet while pressure-bonding the first sheet to the second sheet at a pressure bonding point. The pressure bonding point is a point at which the upper roller and the lower roller can be in contact with each other. The upper roller is adapted to move between a contact position and a separated position. The contact position is a position at which the upper roller can be in contact with the lower roller. The separated position is a position at which the upper roller is separated above from the contact position. The bonding device further includes a movable member, a support portion, a drive portion, and a first movement control portion. The movable member extends in parallel to the first axis line. The movable member is positioned on an opposite side to the upper roller with respect to the first sheet. The support portion is adapted to support the movable member such that the movable member is movable between a standby position and an actuation position. The standby position is on an upstream side in the feed direction with respect to the pressure bonding point. The actuation position is on a downstream side in the feed direction with respect to the pressure bonding point. The drive portion is adapted to, in a state in which the upper roller is in the separated position, drive the support portion to move the movable member to the standby position and the actuation position via a space between the upper roller and the lower roller. The first movement control portion is adapted to control the drive portion to move the movable member from the standby position to the actuation position such that an end portion of the first sheet on the downstream side in the feed direction is arranged on the downstream side in the feed direction with respect to the pressure bonding point.

In the state in which the upper roller is in the separated position, the drive portion drives the support portion to move the movable member from the standby position to the actuation position via the space between the upper roller and the lower roller. At this time, the movable member can hook the first sheet and move from the standby position to the actuation position. Thus, the end portion of the first sheet on the downstream side in the feed direction can reliably move further to the downstream side in the feed direction than the pressure bonding point. With the bonding device, there is no need for a user to manually redo an arrangement operation of the first sheet in which one end side of the first sheet is arranged on the upstream side, in the feed direction, of the pressure bonding point and the other end side is arranged on the downstream side, in the feed direction, of the pressure bonding point, between the upper roller and the lower roller. Thus, the bonding device can improve efficiency of the arrangement operation of the first sheet.

In the bonding device, the support portion may include a rotating shaft portion and a support arm portion. The rotating shaft portion may be coupled to the drive portion. The rotating shaft portion may be adapted to rotate around a third axis line by the drive of the drive portion. The third axis line may extend in parallel to the first axis line. The support arm portion may extend orthogonally to the first axis line. One end portion of the support arm portion may be coupled to the rotating shaft portion. Another end portion of the support arm portion may be coupled to the movable member. A distance between the one end portion and the other end portion of the support arm portion may be larger than a distance between a center of rotation of the upper roller and an outer peripheral surface of the upper roller. The movable member may be adapted to move along a periphery of the upper roller when the support arm portion swings around the rotating shaft portion. In this case, the bonding device can swing the support arm portion around the rotating shaft portion by the drive of the drive portion. Simply by the support portion being provided with the rotating shaft portion and the support arm portion, the support portion can support the movable member such that the movable member can move between the standby position and the actuation position. In this manner, with a simple structure, the bonding device can move the movable member between the standby position and the actuation position.

In the bonding device, the rotating shaft portion may be in a first position in which the third axis line is aligned with the first axis line. In this case, the movable member can move between the standby position and the actuation position along the shape of the outer peripheral surface of the upper roller. By moving the movable member between the standby position and the actuation position, the bonding device can cause the first sheet hooked on the movable member to extend along the outer peripheral surface of the upper roller. Therefore, the first sheet hooked on the movable member and the second sheet do not interfere with each other, and the bonding device can move the end portion of the first sheet on the downstream side in the feed direction, further to the downstream side in the feed direction than the pressure bonding point.

In the bonding device, the rotating shaft portion may be in a second position in which the third axis line is on the upstream side in the feed direction with respect to the first axis line. The distance between the one end portion and the other end portion of the support arm portion may be smaller than a sum of a distance between the first axis line and the third axis line and the distance between the center of rotation of the upper roller and the outer peripheral surface of the upper roller. In this case, the movable member in the actuation position can be in contact with the upper roller on the downstream side, in the feed direction, of the pressure bonding point. In this case, the movable member can hold the first sheet such that the first sheet can be clamped between the movable member and the upper roller on the downstream side, in the feed direction, of the pressure bonding point. Thus, the bonding device can inhibit the end portion of the first sheet on the downstream side in the feed direction from moving from the downstream side to the upstream side in the feed direction with respect to the pressure bonding point.

In the bonding device, the feed mechanism may include an upper roller support member adapted to rotatably support the upper roller. The bonding device may further include a holding portion and a position change portion. The holding portion may hold the support portion and is fixed to the upper roller support member. The position change portion may be adapted to change a fixing position of the holding portion with respect to the upper roller support member. The position change portion may be adapted to change the fixing position of the holding portion such that the rotating shaft portion is movable between a first position and the second position. The first position may be a position in which the third axis line is aligned with the first axis line. In this case, when the rotating shaft portion is in the first position, the movable member can move between the standby position and the actuation position along the shape of the outer peripheral surface of the upper roller. When the rotating shaft portion is in the second position, if the movable member moves to the actuation position, the movable member can be in contact with the upper roller on the downstream side, in the feed direction, of the pressure bonding point. In this case, the movable member can hold the first sheet such that the first sheet can be clamped between the movable member and the upper roller on the downstream side, in the feed direction, of the pressure bonding point. Thus, the bonding device can inhibit the end portion of the first sheet on the downstream side in the feed direction from moving from the downstream side to the upstream side in the feed direction with respect to the pressure bonding point. The position change portion can switch the rotating shaft portion between the first position and the second position, by changing the fixing position of the holding portion with respect to the upper roller support member. Thus, depending on a purpose of the user, the bonding device can switch the rotating shaft portion between the first position and the second position.

The bonding device may further include a reception portion and a downward movement control portion. The reception portion may be adapted to receive a downward movement command to move the upper roller from the separated position to the contact position. The downward movement control portion may be adapted to control the upper roller to move from the separated position to the contact position when the reception portion receives the downward movement command. The first movement control portion may be adapted to, when the reception portion receives the downward movement command, control the drive portion to move the movable member from the standby position to the actuation position before the downward movement control portion causes the upper roller to move. The bonding device may further include a second movement control portion adapted to control the drive portion to move the movable member from the actuation position to the standby position after the first movement control portion has caused the movable member to move to the actuation position. In this case, the user may cause the bonding device to move the upper roller to the contact position before the bonding device bonds the first sheet to the second sheet. When the bonding device receives the downward movement command, before moving the upper roller from the separated position to the contact position, the bonding device can move the movable member from the standby position via the actuation position to the standby position. At this time, the movable member can hook the first sheet and move. Therefore, the end portion of the first sheet on the downstream side in the feed direction can reliably move further to the downstream side in the feed direction than the pressure bonding point, and the bonding device can reliably perform the arrangement operation of the first sheet.

The bonding device may further include a reception portion, a downward movement control portion, and an upward movement control portion. The reception portion may be adapted to receive a downward movement command and an upward movement command. The downward movement command may be a command to move the upper roller from the separated position to the contact position. The upward movement command may be a command to move the upper roller from the contact position to the separated position. The downward movement control portion may be adapted to control the upper roller to move from the separated position to the contact position when the reception portion receives the downward movement command. The upward movement control portion may be adapted to control the upper roller to move from the contact position to the separated position when the reception portion receives the upward movement command. The first movement control portion may be adapted to control the drive portion to move the movable member from the standby position to the actuation position after the upward movement control portion has caused the upper roller to move. The bonding device may further include a third movement control portion adapted to, when the reception portion receives the downward movement command after the first movement control portion has caused the movable member to move to the actuation position, control the drive portion to move the movable member from the actuation position to the standby position before the downward movement control portion causes the upper roller to move. In this case, when the bonding device receives the upward movement command, the bonding device can move the upper roller to the separated position, and thereafter can move the movable member from the standby position to the actuation position. The movable member can hold the end portion of the first sheet on the downstream side in the feed direction such that the end portion can be clamped between the movable member and the upper roller on the downstream side, in the feed direction, of the pressure bonding point. In this state, the user may arrange the second sheet. Before the bonding device bonds the first sheet to the second sheet, the user may cause the bonding device to move the upper roller to the contact position. When the bonding device receives the downward movement command, the bonding device can move the movable member from the actuation position to the standby position before moving the upper roller from the separated position to the contact position. The bonding device can move the upper roller from the separated position to the contact position in a state in which the end portion of the first sheet on the downstream side in the feed direction is arranged on the downstream side, in the feed direction, of the pressure bonding point. Therefore, when the user arranges the second sheet, the bonding device can inhibit the end portion of the first sheet on the downstream side in the feed direction from moving from the downstream side to the upstream side in the feed direction with respect to the pressure bonding point, between the upper roller and the lower roller.

The bonding device may further include a reception portion adapted to receive a first movement command and a second movement command. The first movement command may be a command to move the movable member from the standby position to the actuation position. The second movement command may be a command to move the movable member from the actuation position to the standby position. The first movement control portion may be adapted to control the drive portion to move the movable member from the standby position to the actuation position when the reception portion receives the first movement command in the state in which the upper roller is in the separated position. The bonding device may further include a fourth movement control portion adapted to control the drive portion to move the movable member from the actuation position to the standby position when the reception portion receives the second movement command in the state in which the upper roller is in the separated position, after the first movement control portion has caused the movable member to move to the actuation position. In this case, when the bonding device receives the first movement command in the state in which the upper roller is in the separated position, the bonding device can move the movable member from the standby position to the actuation position. After moving the movable member to the actuation position, when the bonding device receives the second movement command in the state in which the upper roller is in the separated position, the bonding device can move the movable member from the actuation position to the standby position. Thus, the bonding device can move the movable member between the standby position and the actuation position at a timing desired by the user in accordance with the command.

In the bonding device, the reception portion may be adapted to receive a first movement command and a second movement command. The first movement command may be a command to move the movable member from the standby position to the actuation position. The second movement command may be a command to move the movable member from the actuation position to the standby position. The first movement control portion may be adapted to control the drive portion to move the movable member from the standby position to the actuation position when the reception portion receives the first movement command in the state in which the upper roller is in the separated position. The bonding device may further include a fourth movement control portion adapted to control the drive portion to move the movable member from the actuation position to the standby position when the reception portion receives the second movement command in the state in which the upper roller is in the separated position, after the first movement control portion has caused the movable member to move to the actuation position. In this case, when the bonding device receives the first movement command in the state in which the upper roller is in the separated position, the bonding device can move the movable member from the standby position to the actuation position. After moving the movable member to the actuation position, when the bonding device receives the second movement command in the state in which the upper roller is in the separated position, the bonding device can move the movable member from the actuation position to the standby position. Thus, the bonding device can move the movable member between the standby position and the actuation position at a timing desired by the user in accordance with the command.

In the bonding device, the feed mechanism may include a lower roller support member extending upward from a lower portion of the lower roller support member in a direction inclined toward the downstream side in the feed direction. An upper end portion of the lower roller support member may be adapted to support the lower roller. For example, when the second sheet is a tubular object, the user may arrange the second sheet by causing the lower roller support member to pass through the inside of the second sheet, which is the tubular object, from the downstream side in the feed direction. Thus, the user can easily cause the lower roller support member to pass through the second sheet, which is the tubular object, and the bonding device makes it possible to easily perform the arrangement operation of the second sheet.

### BRIEF DESCRIPTION OF THE DRAWINGS

Embodiments will be described below in detail with reference to the accompanying drawings in which:
FIG. 1 is a perspective view of a bonding device 1 placed on an upper surface of a work bench 200;
FIG. 2 is a left-side view of the bonding device 1;
FIG. 3 is a perspective view showing an internal structure of the bonding device 1;
FIG. 4 is a left-side view showing the internal structure of the bonding device 1;
FIG. 5 is an enlarged view of a region W shown in FIG. 2;
FIG. 6 is a perspective view of a movement mechanism 700 and its vicinity;
FIG. 7 is an enlarged view of the region W shown in FIG. 2 when a rotating shaft portion 73A is in a second position;
FIG. 8 is an enlarged view of the region W shown in FIG. 2 when the rotating shaft portion 73A is in a first position;
FIG. 9 is a block diagram showing an electrical configuration of the bonding device 1;
FIG. 10 is a flowchart of first main processing;
FIG. 11 is a flowchart showing a continuation of FIG. 10;
FIG. 12 is a flowchart of second main processing;
FIG. 13 is a flowchart of third main processing according to a second embodiment; and
FIG. 14 is a perspective view of a movement mechanism 701 according to a modified example and its vicinity.

### DETAILED DESCRIPTION

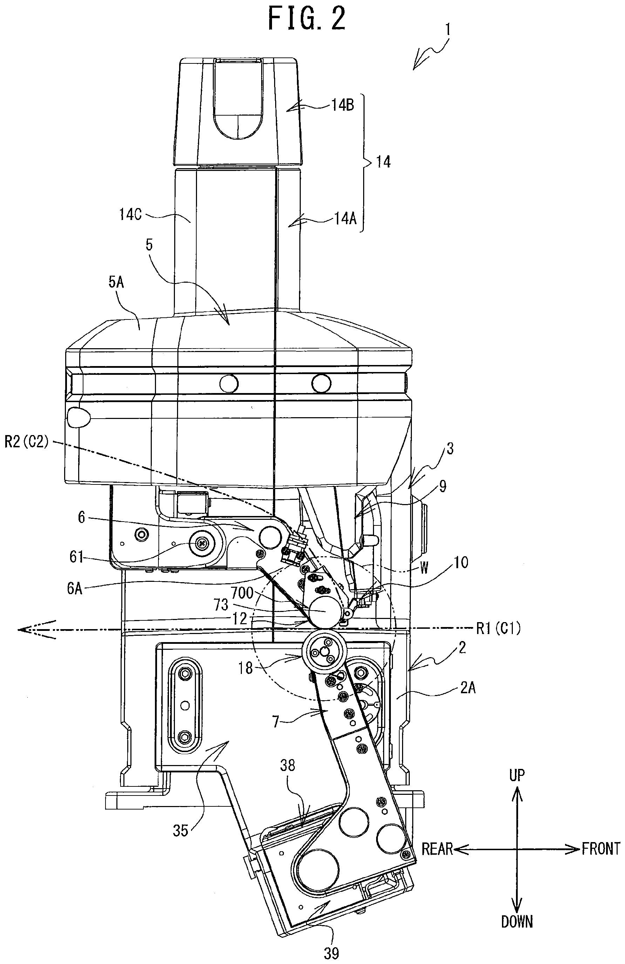

A bonding device 1 according to a first embodiment of the present invention will be explained. In the explanation below, the left and right, the front and rear, and the up and down shown by arrows in the drawings are used. The bonding device 1 performs a bonding operation that bonds two sheets of bonding objects using an adhesive while feeding the two sheets of bonding objects. The bonding objects are flexible sheets, such as cloths, for example. As shown in FIG. 2, the bonding device 1 can perform a tape bonding process that bonds a cloth C1 and a tape C2 using an adhesive. The cloth C1 used in the tape bonding process is, for example, a tubular object. The tape C2 used in the tape bonding process is a cloth having a long length. The tubular object is a tubular bonding object formed by joining edges together, such as a sleeve, a hem, or the like of clothes. In the first embodiment, the bonding device 1 that performs the tape bonding process will be explained.

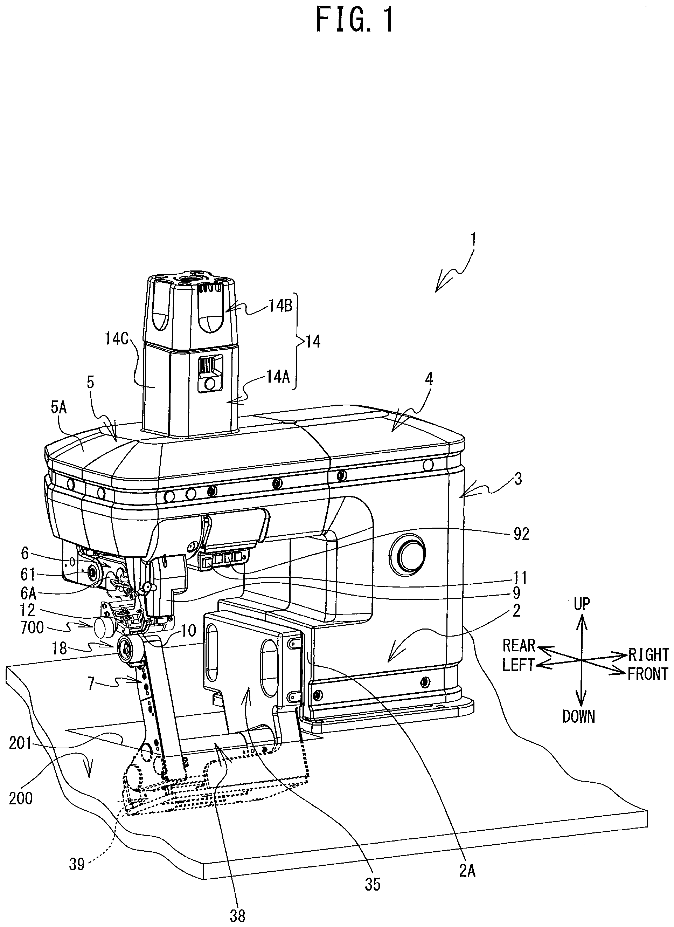

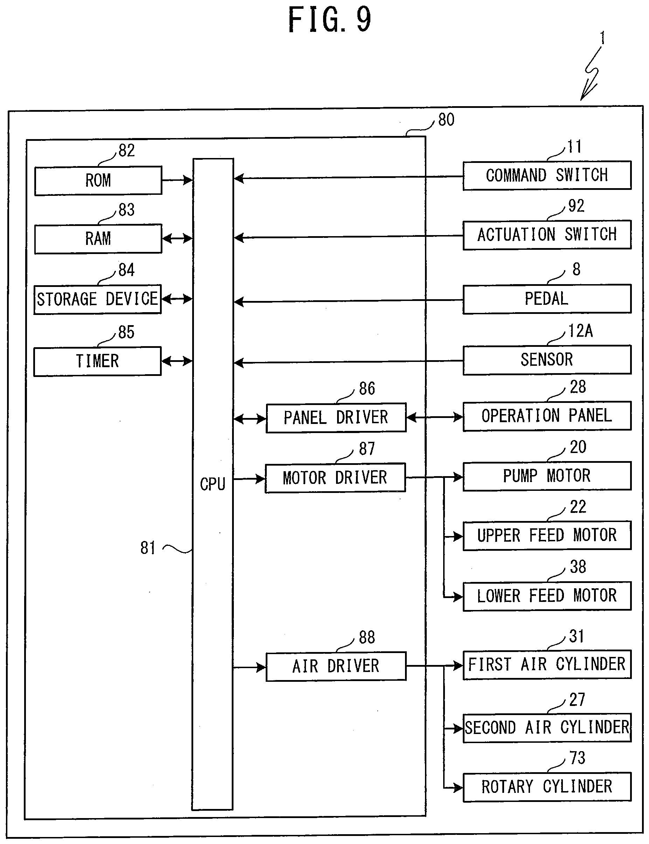

The structure of the bonding device 1 will be explained with reference to FIG. 1 and FIG. 2. In FIG. 1, sections hidden by a work bench 200 are shown by dotted lines. The bonding device 1 is placed on an upper surface of the work bench 200. The bonding device 1 includes with a base portion 2, a pillar 3, an arm 4, a head 5, an upper feed arm 6, a movement mechanism 700, a lower feed arm 7, a lever 9, a nozzle 10, an operation panel 28 (refer to FIG. 9), a control unit 80 (refer to FIG. 9), and the like.

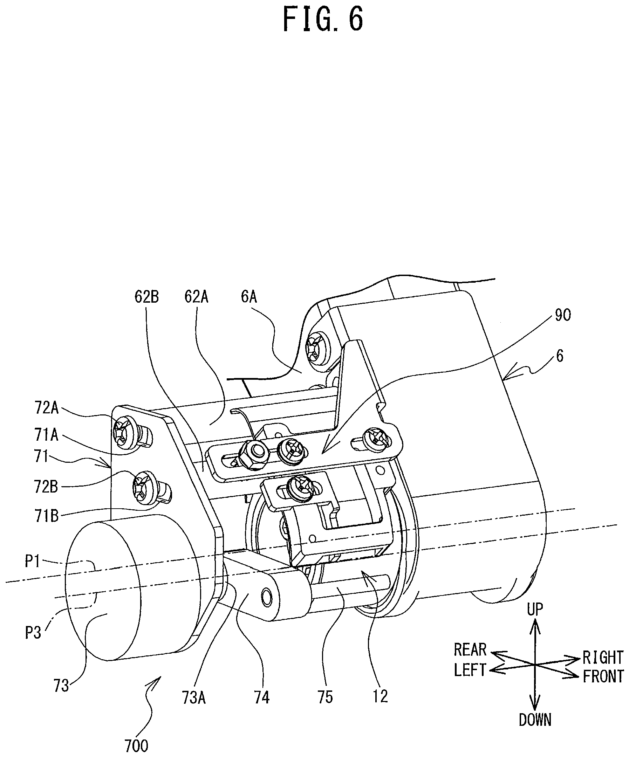

The base portion 2 has a substantially cuboid shape, and is fixed to the upper surface of the work bench 200 using screws. A left side surface of the base portion 2 is provided with an attachment surface 2A. The attachment surface 2A is parallel to the vertical direction. The pillar 3 has a substantially rectangular column shape, and extends vertically upward from an upper surface of the base portion 2. The arm 4 extends leftward from the upper end portion of the pillar 3. A lower portion of a front surface of the arm 4 is provided with a command switch 11. The command switch 11 receives a command that causes the nozzle 10 to move to a proximate position or a retracted position by swinging the lever 9. The arm 4 is provided with an actuation switch 92 on the right side of the command switch 11. The actuation switch 92 receives a command that causes a round bar 75 (refer to FIG. 6) of the movement mechanism 700 to move to a standby position or an actuation position. The head 5 is a section that extends further to the left from the left end portion of the arm 4.

The upper feed arm 6 extends forward and substantially horizontally from the rear end side of a lower surface of the head 5, and the leading end side of the upper feed arm 6 bends diagonally downward toward the front. The upper feed arm 6 is provided with a shaft portion 61 at substantially a central portion in the front-rear direction. An axis line that passes through the center of the shaft portion 61 extends in the left-right direction. A first air cylinder 31 (refer to FIG. 9) is provided inside the upper feed arm 6. When the upper feed arm 6 is driven by the first air cylinder 31, the leading end side of the upper feed arm 6 can swing substantially in the up-down direction around the shaft portion 61. A movable portion of the first air cylinder 31 is coupled to the rear end portion of the upper feed arm 6. The first air cylinder 31 includes an air inlet. The air inlet is connected to an intake/exhaust hose. The bonding device 1 controls the intake and exhaust of compressed air from the intake/exhaust hose to the air inlet. The position of a piston provided inside the first air cylinder 31 moves in accordance with the control of the air intake and exhaust. The lower end portion of the piston is connected to the movable portion. In accordance with a movement amount of the piston, the leading end side of the upper feed arm 6 swings substantially in the up-down direction around the shaft portion 61 via the movable portion.

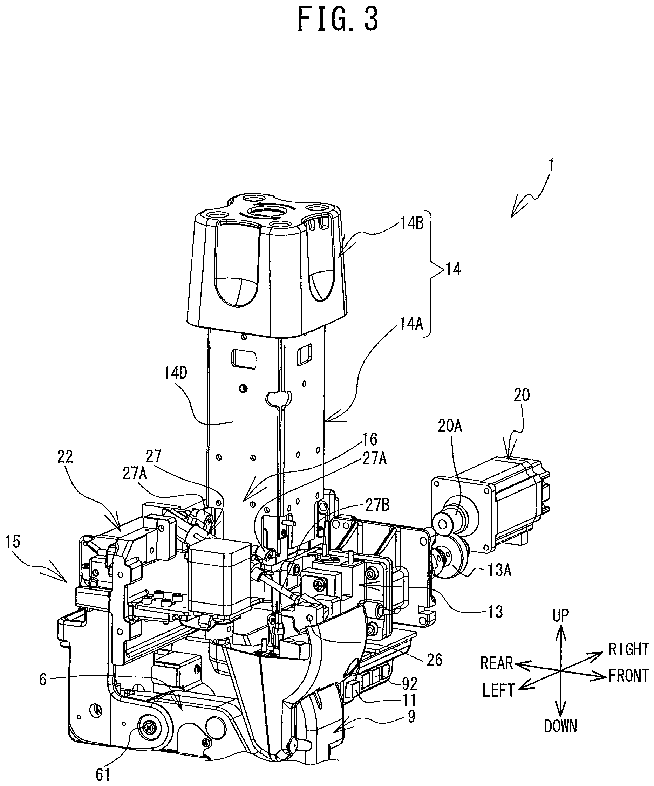

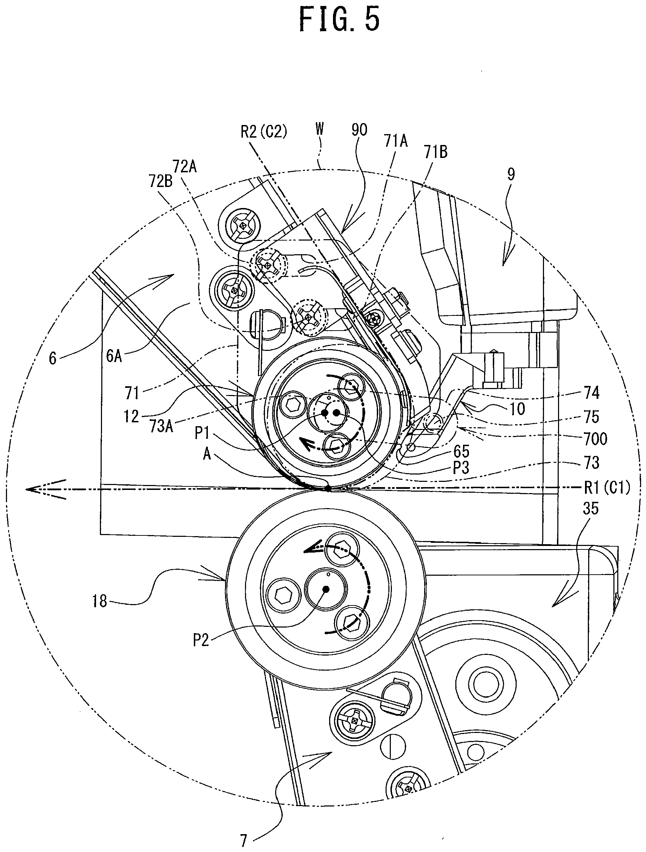

The leading end portion of the upper feed arm 6 rotatably supports an upper roller 12. The center of rotation of the upper roller 12 is a first axis line P1 (refer to FIG. 5). The first axis line P1 extends in the left-right direction. An upper roller drive mechanism 15 (refer to FIG. 3) is provided inside the head 5. When the upper roller 12 is driven by the upper roller drive mechanism 15, the upper roller 12 can rotate in a clockwise direction as seen from the left side around the first axis line P1.

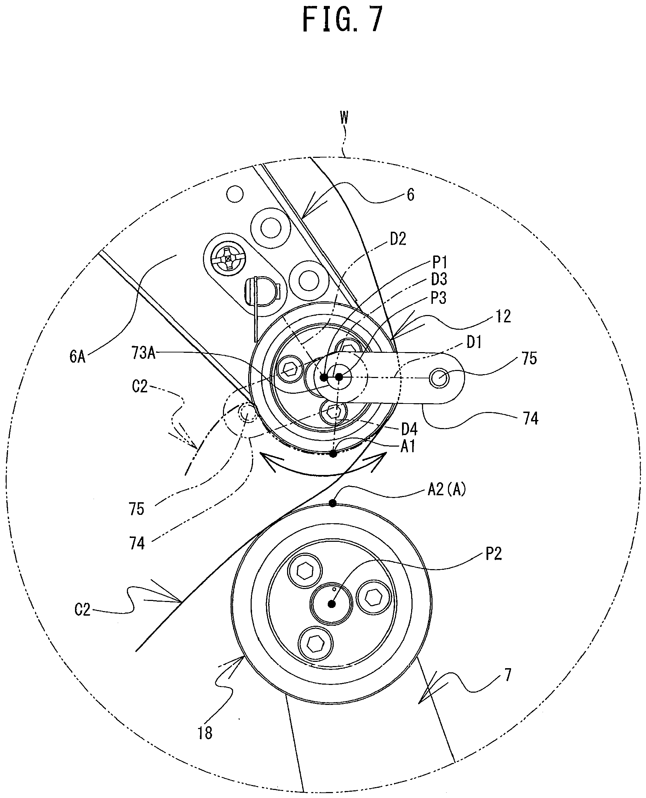

The upper roller 12 can move between a separated position (refer to FIG. 7) and a contact position (refer to FIG. 5) in accordance with the swing of the upper feed arm 6. The separated position is a position of the upper roller 12 when the upper roller 12 is separated above from the lower roller 18. When the leading end side of the upper feed arm 6 has swung to an uppermost position, the upper roller 12 is in the separated position. The contact position is a position in which an outer peripheral surface of the upper roller 12 can be in contact with an outer peripheral surface of the lower roller 18. When the leading end side of the upper feed arm 6 has swung to a lowermost position, the upper roller 12 is in the contact position. When the upper roller 12 and the lower roller 18 are in the contact position as seen from the left side, a point at which the upper roller 12 and the lower roller 18 can be in contact with each other is a pressure bonding point A (refer to FIG. 5). A sensor 12A (refer to FIG. 9) is provided on the first air cylinder 31. The bonding device 1 can detect that the upper roller 12 is in the separated position using the sensor 12A. The sensor 12A is a proximity switch, for example, and can transmit an on/off signal to a CPU 81 (refer to FIG. 9). When the upper roller 12 is in the separated position, the sensor 12A transmits an on signal to the CPU 81. When the upper roller 12 is not in the separated position, the sensor 12A transmits an off signal to the CPU 81.

A plate-like tape guide 90 (refer to FIG. 6) is fixed to the vicinity of the front end portion of a left surface 6A of the upper feed arm 6, using screws. A tape supply source is provided to the rear of the bonding device 1. The tape guide 90 guides the tape C2 (refer to FIG. 2) supplied by the tape supply source along the outer peripheral surface of the upper roller 12.

The movement mechanism 700 is provided in the vicinity of the leading end portion of the upper feed arm 6. The movement mechanism 700 can hold an end portion of the tape C2, which is arranged along the outer peripheral surface of the upper roller 12, in a position to the rear of the pressure bonding point A, or can move the end portion of the tape C2 to the rear of the pressure bonding point A. The movement mechanism 700 will be described in detail below.

The lower feed arm 7 is detachably attached to the attachment surface 2A via an attachment member 35. The lower feed arm 7 extends upward and rearward from its lower portion, which is positioned lower than the base portion 2. The leading end portion of the lower feed arm 7 rotatably supports the lower roller 18. The lower roller 18 is opposed to the upper roller 12. The center of rotation of the lower roller 18 is a second axis line P2 (refer to FIG. 5). The second axis line P2 extends in parallel to the first axis line P1 (namely, in the left-right direction). A lower roller drive mechanism is provided inside the lower feed arm 7. When the lower roller 18 is driven by the lower roller drive mechanism, the lower roller 18 can rotate in a counterclockwise direction as seen from the left side around the second axis line P2. The outer diameter of the lower roller 18 is larger than the outer diameter of the upper roller 12.

The lower portion of the lower feed arm 7 and a lower portion of the attachment member 35 are positioned lower than a bottom portion of the base portion 2. The lower portion of the lower feed arm 7 and the lower portion of the attachment member 35 are disposed inside an opening 201 (refer to FIG. 1) in the upper surface of the work bench 200 by being lowered into the opening 201 from above. Thus, a lower surface of the base portion 2 can be fixed to the upper surface of the work bench 200.

The lower roller drive mechanism includes a lower feed motor 38, a plurality of pulleys, a timing belt, and the like. The lower feed motor 38 is fixed to the right side of a plate surface of a bracket 39. The bracket 39 has the plate surface that is substantially rectangular as seen from the left side, and is provided on the inside of the attachment member 35. A hole is provided in the bracket 39. A drive shaft of the lower feed motor 38 protrudes to the left from the hole, and is connected to a pulley provided inside the lower feed arm 7. The lower roller drive mechanism uses the plurality of pulleys, the timing belt, and the like to transmit the power of the lower feed motor 38 to the lower roller 18. Thus, the lower roller 18 can rotate in the counterclockwise direction as seen from the left side around the second axis line P2.

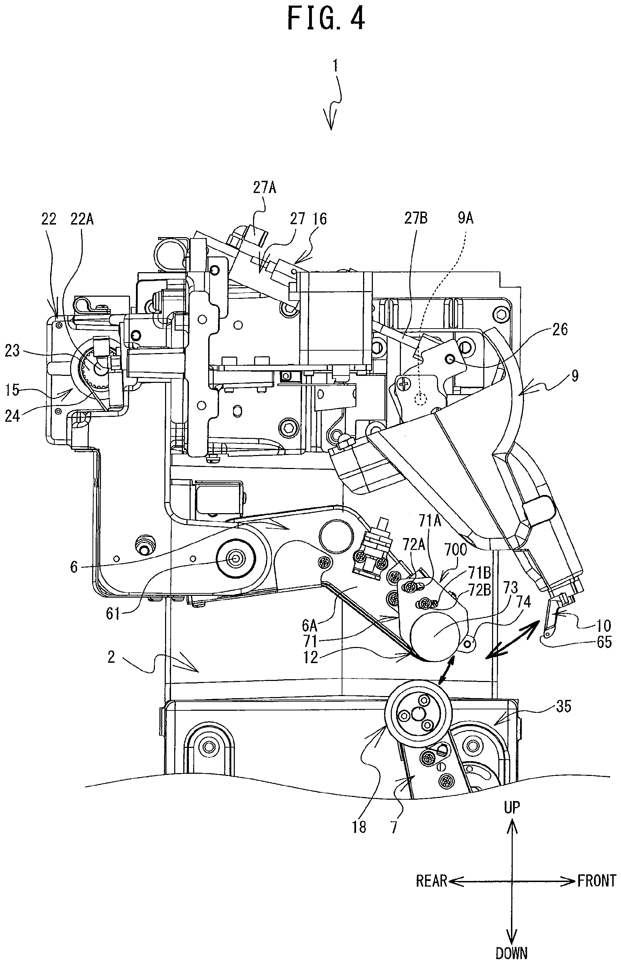

The lever 9 has an arm shape and extends downward from the front end side of the lower surface of the head 5. A rotating shaft 9A (refer to FIG. 4) rotatably supports a portion, of the lever 9, slightly below its upper end. The rotating shaft 9A extends in the left-right direction. The left end portion of the rotating shaft 9A supports the lever 9. The right end portion of the rotating shaft 9A is connected to a gear pump 13 (refer to FIG. 3). Thus, the lower end portion of the lever 9 can swing substantially in the front-rear direction around the rotating shaft 9A.

A supply channel of the adhesive is provided inside the lever 9. An upper end portion of the supply channel is connected to a flow channel of the adhesive provided inside the rotating shaft 9A. The supply channel can supply the nozzle 10 with the adhesive supplied by the gear pump 13 via the flow channel. The lever 9 is provided with a bar-shaped heater in the vicinity of the supply channel. The heater can heat the adhesive flowing through the supply channel of the lever 9.

The nozzle 10 is detachably mounted on the lower end portion of the lever 9. The nozzle 10 includes a discharge outlet 65 (refer to FIG. 5) in a position that is opposed to the outer peripheral surface of the upper roller 12. The discharge outlet 65 is an opening that discharges the adhesive.

The operation panel 28 (refer to FIG. 9, not shown in FIG. 1) is provided on the upper surface of the work bench 200. The operation panel 28 includes a liquid crystal display portion, various switches, and the like. The liquid crystal display portion can display various screens. By operating various switches, a user can input various types of information into the bonding device 1. A pedal 8 (refer to FIG. 9) is provided below the work bench 200. The user can depress the pedal 8 in the direction of the user's toe and can depress the pedal 8 back in the direction of the user's heel. The pedal 8 receives a command to swing the upper feed arm 6 to move the upper roller 12 to the contact position or the separated position. The control unit 80 (refer to FIG. 9) is placed on a lower surface of the work bench 200, and controls operation of the bonding device 1.

Feed paths R1 and R2 will be explained with reference to FIG. 2 and FIG. 5. In FIG. 5, the movement mechanism 700 is shown by dash-and-two-dot lines. The feed path R1 is a feed path of the cloth C1 in the tape bonding process. The feed path R2 is a feed path of the tape C2 in the tape bonding process. The upper roller 12 and the lower roller 18 in the contact position are opposed to each other in the up-down direction, with the feed paths R1 and R2 being between the upper roller 12 and the lower roller 18, and can be in contact with each other at the pressure bonding point A.

The feed path R1 extends from the front of the bonding device 1 toward the rear, passing through the pressure bonding point A. The feed path R1 passes between the outer peripheral surface of the lower roller 18 and the round bar 75 of the movement mechanism 700. The feed path R2 passes from the tape supply source along the outer peripheral surface of the upper roller 12, after passing an upper portion of the upper roller 12, and extends to the rear, passing through the pressure bonding point A. The feed path R2 passes between the outer peripheral surface of the upper roller 12 and the round bar 75 of the movement mechanism 700. The direction from the upstream side to the downstream side of the feed path R1 is a feed direction of the cloth C1 (hereinafter referred to as a cloth feed direction). The direction from the upstream side to the downstream side of the feed path R2 is a feed direction of the tape C2 (hereinafter referred to as a tape feed direction). The cloth feed direction and the tape feed direction are orthogonal to an extending direction of the first axis line P1.

As shown in FIG. 5, the discharge outlet 65 is opposed to the outer peripheral surface of the upper roller 12, with a specified clearance between the discharge outlet 65 and the outer peripheral surface of the upper roller 12, on the upstream side in the tape feed direction relative to the pressure bonding point A. The discharge outlet 65 discharges the adhesive toward a bonding surface that is on an opposite side to the upper roller 12 side of the tape C2 that moves along the feed path R2. Thus, by rotatably driving each of the upper roller 12 and the lower roller 18, the bonding device 1 can overlay the bonding surface of the tape C2, to which the adhesive has been attached, on an upper surface of the cloth C1 arranged below the tape C2, and can feed the cloth C1 and the tape C2 to the rear while pressure-bonding the cloth C1 and the tape C2 at the pressure bonding point A.

An internal structure of the head 5 will be explained with reference to FIG. 3 and FIG. 4. The gear pump 13, a cartridge mounting portion 14, the upper roller drive mechanism 15, a lever swinging mechanism 16, and the like are provided inside a cover 5A (refer to FIG. 1) of the head 5. The gear pump 13 is provided on a front right portion of the head 5, and a supply channel of the adhesive is provided inside the gear pump 13. A pump motor 20 is provided inside the arm 4 (refer to FIG. 1). A gear 20A is fixed to a rotating shaft of the pump motor 20, and meshes with a gear 13A of the gear pump 13. When the pump motor 20 is driven, the gear 13A is driven. When the gear 13A is driven, the gear pump 13 can draw an appropriate amount of the adhesive from a cartridge mounted in the cartridge mounting portion 14, and can supply the adhesive to the supply channel provided inside the lever 9 via the flow channel provided inside the rotating shaft 9A.

The cartridge mounting portion 14 is provided to the rear of the gear pump 13, and includes a main body 14A and a lid 14B. The main body 14A includes a cover 14C (refer to FIG. 1) and a storage portion 14D. The cover 14C covers the periphery of the storage portion 14D. The storage portion 14D is provided standing vertically, and is a bottomed rectangular cylinder whose top portion is open. A cartridge is detachably mounted inside the storage portion 14D. The cartridge houses a hot melt adhesive. When the cartridge is mounted in the storage portion 14D, the storage portion 14D can supply the adhesive to the gear pump 13. The hot melt adhesive is liquefied when the adhesive is heated to a specified temperature, and solidifies at a temperature lower than the specified temperature. The storage portion 14D is provided with a pair of heaters on both the left and right sides of the cartridge. The pair of heaters heat up the cartridge. As a result, the adhesive melts and becomes liquefied. The lid 14B is detachably provided on an upper portion of the storage portion 14D, and opens and closes the opening in the upper portion of the storage portion 14D. When the lid 14B is screwed on by a rotation operation, the lid 14B can be fixed to the upper portion of the storage portion 14D, and can be removed by being loosened.

As shown in FIG. 4, the upper roller drive mechanism 15 is provided on the left end side of the head 5. The upper roller drive mechanism 15 includes an upper feed motor 22, a drive pulley 23, a first driven pulley, a first timing belt 24, a second driven pulley, a second timing belt, and the like. The first driven pulley, the second driven pulley, and the second timing belt are provided inside the upper feed arm 6. The upper feed motor 22 is fixed, on a rear face side of the head 5, to the upper portion of the head 5 on the left end side. A drive shaft 22A of the upper feed motor 22 extends to the left. The drive pulley 23 is fixed to the drive shaft 22A. The first timing belt 24 is provided around between the drive pulley 23 and the first driven pulley. The second driven pulley is fixed to a rotating shaft of the upper roller 12 inside the upper feed arm 6. The second timing belt is provided around the first driven pulley and the second driven pulley. Thus, the power of the upper feed motor 22 is transmitted to the upper roller 12 via the drive pulley 23, the first driven pulley, the first timing belt 24, the second driven pulley, and the second timing belt. As a result, the upper roller 12 rotates in the clockwise direction as seen from the left side around the first axis line P1 (refer to FIG. 5).

As shown in FIG. 3, the lever swinging mechanism 16 is provided on the left end side of the head 5. The lever swinging mechanism 16 includes a second air cylinder 27 and a coupling shaft 26. The second air cylinder 27 is provided adjacent to the left side of the storage portion 14D. The second air cylinder 27 includes two air inlets 27A at the front and the rear. Intake/exhaust hoses are connected to the two air inlets 27A. The bonding device 1 controls the intake and exhaust of the compressed air from the intake/exhaust hoses to the two air inlets 27A. The position of a piston provided inside the second air cylinder 27 moves in accordance with the control of the air intake and exhaust. A rod-shaped movable portion 27B extends in the front-rear direction, and is connected to the piston. When the piston moves, the movable portion 27B moves in the front-rear direction. The coupling portion 26 is provided on the leading end portion of the movable portion 27B. The coupling shaft 26 is coupled to the upper end portion of the lever 9, at a position that is separated upward and forward from the rotating shaft 9A (refer to FIG. 4).

As shown in FIG. 4, when the movable portion 27B moves downward and forward, the movable portion 27B urges the coupling shaft 26 forward. Thus, the lever 9 swings in the clockwise direction as seen from the left side around the rotating shaft 9A, and the nozzle 10 moves to the proximate position. As shown in FIG. 5, the proximate position is a position of the nozzle 10 when the discharge outlet 65 is close to the front side of the outer peripheral surface of the upper roller 12. When the bonding operation is performed, the bonding device 1 moves the nozzle 10 to the proximate position. When the movable portion 27B moves upward and rearward, the movable portion 27B pulls the coupling shaft 26 to the rear. Thus, the lever 9 swings in the counterclockwise direction as seen from the left side around the rotating shaft 9A, and the nozzle 10 moves to the retracted position. As shown in FIG. 4, the retracted position is a position of the nozzle 10 when the discharge outlet 65 is separated significantly forward from the outer peripheral surface of the upper roller 12. For example, before the tape bonding process, when the user arranges the tape C2 along the outer peripheral surface of the upper roller 12, the bonding device 1 moves the nozzle 10 to the retracted position. At this time, it is easy for the user to perform the operation.

A cloth arrangement operation and a tape arrangement operation, which are performed by the user, will be explained with reference to FIG. 5. The cloth arrangement operation is an operation in which the cloth C1 is arranged in a cloth arrangement position. The cloth arrangement position is a position of the cloth C1, between the upper roller 12 and the lower roller 18, when one end portion of the cloth C1 is on the upstream side in the cloth feed direction with respect to the pressure bonding point A and the other end portion, which is on an opposite side to the one end portion, is on the downstream side in the cloth feed direction with respect to the pressure bonding point A. The tape arrangement operation is an operation in which the tape C2 is arranged in a tape arrangement position. The tape arrangement position is a position of the tape C2, between the upper roller 12 and the lower roller 18, when one end side of the tape C2 is on the upstream side in the tape feed direction with respect to the pressure bonding point A and the other end side, which is on an opposite side to the one end side, is on the downstream side in the tape feed direction with respect to the pressure bonding point A. Using the upper roller 12 and the lower roller 18 that are in the contact position, the bonding device 1 clamps the cloth C1 and the tape C2, which are respectively located in the cloth arrangement position and the tape arrangement position, at the pressure bonding point A, and feeds the cloth C1 and the tape C2. Before the bonding device 1 performs the tape bonding process, it is necessary for the user to perform the cloth arrangement operation and the tape arrangement operation. Before the cloth arrangement operation and the tape arrangement operation, the bonding device 1 may move the upper roller 12 to the separated position. In the tape arrangement operation, the user may cause the tape C2 supplied by the tape supply source to pass through the tape guide 90, and arranges the tape C2 from the upstream side to the downstream side in the tape feed direction with respect to the pressure bonding point A. The cloth C1 is the tubular object. In the cloth arrangement operation, the user may cause the lower feed arm 7 to pass through the inside of the cloth C1, and arranges the cloth C1 from the downstream side to the upstream side in the cloth feed direction with respect to the pressure bonding point A. The lower feed arm 7 extends upward in a direction in which the lower feed arm 7 is inclined toward the downstream side in the tape feed direction. Thus, the user can easily cause the lower feed arm 7 to pass through the inside of the cloth C1, which is the tubular object. Thus, the bonding device 1 makes it possible to easily perform the cloth arrangement operation.

In the bonding device 1, there is a case in which the next tape bonding process is performed using, for example, the tape C2 used in the previous tape bonding process and the new cloth C1 arranged in the cloth arrangement position. If the user cuts the tape C2 used in the previous tape bonding process after the completion of the bonding process, the tape C2 on the upstream side in the tape feed direction relative to a cutting position can be used in the next tape bonding process. In this case, by using the previously used tape C2, the user can omit the tape arrangement operation to be performed before the next tape bonding process. The user may perform the cloth arrangement operation in a state in which the tape arrangement operation is complete. The cutting position is on the downstream side in the tape feed direction relative to the pressure bonding point A, and the end portion of the cut tape C2 is in a free state such that it is not held by anything further on the downstream side in the tape feed direction than the pressure bonding point A. When the user performs the cloth arrangement operation for the next tape bonding process, there is a case in which a hand of the user or the cloth C1 becomes entangled with the end portion of the tape C2 on the downstream side in the tape feed direction. In this case, there is a possibility that the end portion may move further to the upstream side in the tape feed direction than the pressure bonding point A. The bonding device 1 can inhibit this possibility owing to the movement mechanism 700 that will be explained below.

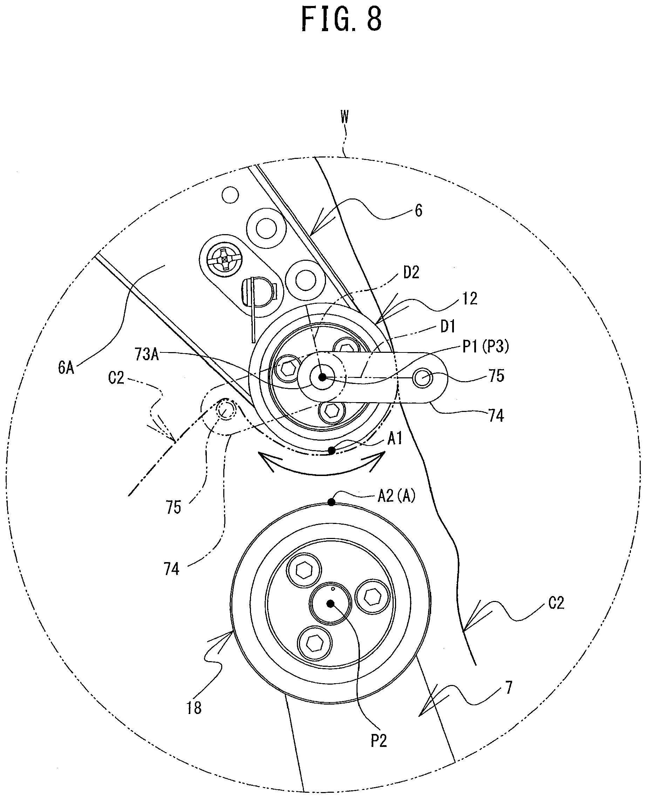

The movement mechanism 700 will be explained with reference to FIG. 6 to FIG. 8. In FIG. 7 and FIG. 8, respective members when the round bar 75 is in the standby position are shown by solid lines, the respective members when the round bar 75 is in the actuation position are shown by dash-and-two-dot lines, and a holding plate 71 and the like are omitted. The movement mechanism 700 includes the holding plate 71, a rotary cylinder 73, a rotating shaft portion 73A, a support arm portion 74 and the round bar 75. The holding plate 71 holds the rotating shaft portion 73A and the support arm portion 74, and has a polygonal shape in a side view. An upper portion of the holding plate 71 is provided with a pair of holes 71A and 71B. The pair of holes 71A and 71B penetrate the holding plate 71 in the left-right direction, and each have a substantially elliptical shape that is long in the front-rear direction. The hole 71A is provided above and to the rear of the hole 71B.

The holding plate 71 is fixed to the upper feed arm 6 using a pair of screws 72A and 72B and a pair of projecting pins 62A and 62B. The pair of projecting pins 62A and 62B are each provided in the vicinity of the leading end portion of the upper feed arm 6, and each have a columnar shape extending to the left from the left surface 6A. The projecting pin 62A is provided above and to the rear of the projecting pin 62B. The pair of projecting pins 62A and 62B are respectively provided with screw holes to tighten the pair of screws 72A and 72B. The screw holes extend to the right from the left end portions of the pair of projecting pins 62A and 62B, respectively. The pair of screws 72A and 72B respectively penetrate the pair of holes 71A and 71B from the left side, and are tightened into the screw holes of the pair of projecting pins 62A and 62B. Thus, the holding plate 71 can be fixed to the upper feed arm 6. When the pair of screws 72A and 72B are loosened, the holding plate 71 can move along the major axis direction (the front-rear direction) of the pair of holes 71A and 71B with respect to the left surface 6A. Thus, the bonding device 1 can change the fixing position of the holding plate 71 with respect to the upper feed arm 6.

The rotary cylinder 73 is fixed to a lower portion of a left surface of the holding plate 71. The rotary cylinder 73 includes an air inlet that is connected to an intake/exhaust hose. The bonding device 1 controls intake and exhaust of compressed air from the intake/exhaust hose to the air inlet. The rotary cylinder 73 drives the support arm portion 74 in accordance with the intake and exhaust of the compressed air.

The rotating shaft portion 73A is a drive shaft of the rotary cylinder 73. The rotating shaft portion 73A protrudes to the right from a hole provided in the holding plate 71. An axis line of the rotating shaft portion 73A is a third axis line P3. The third axis line P3 extends in parallel to the first axis line P1 (namely, in the left-right direction). The rotating shaft portion 73A can rotate around the third axis line P3 when the rotary cylinder 73 is driven.

The rotating shaft portion 73A can move in the front-rear direction in accordance with a change in the fixing position of the holding plate 71 with respect to the left surface 6A. The rotating shaft portion 73A can move between a first position (refer to FIG. 8) and a second position (refer to FIG. 7). The first position is a position of the rotating shaft portion 73A when the third axis line P3 is aligned with the first axis line P1. The second position is a position of the rotating shaft portion 73A when the third axis line P3 is on the upstream side in the tape feed direction with respect to the first axis line P1. If the user loosens the pair of screws 72A and 72B and changes the fixing position of the holding plate 71 with respect to the left surface 6A in the front-rear direction, the user can move the rotating shaft portion 73A between the first position and the second position. When the positions of the pair of projecting pins 62A and 62B respectively correspond to the front end portions of the pair of holes 71A and 71B, the rotating shaft portion 73A is in the first position. When the positions of the pair of projecting pins 62A and 62B respectively correspond to positions (for example, the rear end portions) that are to the rear of the front end portions of the pair of holes 71A and 71B, the rotating shaft portion 73A is in the second position.

The support arm portion 74 extends in a direction orthogonal to the first axis line PI, and has a substantially cuboid shape. Both ends in the extending direction of the support arm portion 74 are rounded in an arc shape. The length of the support arm portion 74 is longer than a distance between the center of rotation of the upper roller 12 and the outer peripheral surface of the upper roller 12. One end portion of the support arm portion 74 is coupled to the rotating shaft portion 73A. When the support arm portion 74 is driven by the rotary cylinder 73, the support arm portion 74 can swing around the rotating shaft portion 73A within a specified swing range.

The round bar 75 extends to the right from the other end portion that is on an opposite side to the one end portion of the support arm portion 74, and is positioned on an opposite side to the upper roller 12 with respect to the tape C2. The diameter of the round bar 75 is smaller than a distance between the outer peripheral surface of the upper roller 12 in the separated position and the outer peripheral surface of the lower roller 18. The round bar 75 moves between the standby position and the actuation position in accordance with the swing of the support arm portion 74. The standby position is a position of the round bar 75 when the round bar 75 is on the upstream side in the tape feed direction relative to the pressure bonding point A. When the support arm portion 74 has swung in the counterclockwise direction as seen from the left side as much as possible within the swing range, the round bar 75 is in the standby position. The actuation position is a position of the round bar 75 when the round bar 75 is on the downstream side in the tape feed direction relative to the pressure bonding point A. When the support arm portion 74 has swung in the clockwise direction as seen from the left side as much as possible within the swing range, the round bar 75 is in the actuation position. When the support arm portion 74 swings around the rotating shaft portion 73A, the round bar 75 moves around the upper roller 12 between the standby position and the actuation position.

As shown in FIG. 7, as seen from the left side, a distance D1 is a distance between the third axis line P3 and a position, of the outer peripheral surface of the round bar 75, closest to the third axis line P3. As seen from the left side, a distance D2 is a distance between the first axis line P1 and the outer peripheral surface of the upper roller 12. As seen from the left side, a distance D3 is a distance between the first axis line P1 and the third axis line P3. As seen from the left side, a distance D4 is a distance between the third axis line P3 and a point A1. As seen from the left side, the point A1 is a point on the outer peripheral surface of the upper roller 12 when the upper roller 12 is in contact with the lower roller 18 in the contact position. A point A2 is a point on the outer peripheral surface of the lower roller 18 when the upper roller 12 is in contact with the lower roller 18 in the contact position. When the upper roller 12 moves from the contact position to the separated position, the lower roller 18 does not move. Therefore, the point A2 matches the pressure bonding point A. When the rotating shaft portion 73A is in the second position, the distance D1 is smaller than the sum of the distance D2 and the distance D3, and larger than the distance D4. The distance D1 is smaller than a distance between the third axis line P3 and the point A2 as seen from the left side. Thus, when the round bar 75 moves between the standby position and the actuation position, the round bar 75 does not come into contact with the lower roller 18. When the rotating shaft portion 73A is in the second position, the round bar 75 can move between the standby position and the actuation position in accordance with the swing of the support arm portion 74, and the round bar 75 in the actuation position can be in contact with the outer peripheral surface of the upper roller 12.

When the rotating shaft portion 73A is in the second position, the round bar 75 in the standby position is located on the upstream side in the tape feed direction with respect to the pressure bonding point A. When the round bar 75 is in the standby position and the nozzle 10 is in the proximate position, the round bar 75 is separated from the outer peripheral surface of the upper roller 12, to the front of the third axis line P3 and above the nozzle 10 (on the upstream side in the tape feed direction) (refer to FIG. 5). Thus, the bonding device 1 can inhibit the adhesive discharged by the nozzle 10 from adhering to the round bar 75.

When the rotating shaft portion 73A is in the second position, the round bar 75 in the actuation position is located on the downstream side in the tape feed direction relative to the pressure bonding point A. When the round bar 75 is in the actuation position, the round bar 75 can be in contact with the outer peripheral surface of the upper roller 12, below and to the rear of the third axis line P3. When the tape C2 passes between the round bar 75 and the outer peripheral surface of the upper roller 12 and is in the tape arrangement position, if the round bar 75 moves from the standby position to the actuation position, the end portion of the tape C2 on the downstream side in the tape feed direction can be held by being clamped between the round bar 75 and the outer peripheral surface of the upper roller 12. When the user performs the cloth arrangement operation in this state, the bonding device 1 can inhibit a hand of the user or the cloth C1 from becoming entangled with the end portion of the tape C2 on the downstream side in the tape feed direction. Thus, the bonding device 1 can inhibit the end portion of the tape C2 on the downstream side in the feed direction from moving further to the upstream side in the tape feed direction than the pressure bonding point A as a result of the cloth arrangement operation. Thus, the bonding device 1 can improve efficiency of the tape arrangement operation.

As shown in FIG. 8, when the rotating shaft portion 73A is in the first position, the distance D1 is larger than the distance D2 and is smaller than the distance between the third axis line P3 and the point A2 as seen from the left side. Thus, when the round bar 75 moves between the standby position and the actuation position, the round bar 75 does not come into contact with the lower roller 18. When the rotating shaft portion 73A is in the first position, in accordance with the swing of the support arm portion 74, the round bar 75 can move along the shape of the outer peripheral surface of the upper roller 12 between the standby position and the actuation position.

When the rotating shaft portion 73A is in the first position, the round bar 75 in the standby position is located on the upstream side in the tape feed direction relative to the pressure bonding point A. When the round bar 75 is in the standby position and the nozzle 10 is in the proximate position, the round bar 75 is separated from the outer peripheral surface of the upper roller 12, to the front of the third axis line P3 and above the nozzle 10 (on the upstream side in the tape feed direction). Thus, the bonding device 1 can inhibit the adhesive discharged by the nozzle 10 from adhering to the round bar 75.

When the rotating shaft portion 73A is in the first position, the round bar 75 in the actuation position is located on the downstream side in the tape feed direction relative to the pressure bonding point A. When the round bar 75 is in the actuation position, the round bar 75 is separated from the outer peripheral surface of the upper roller 12, below and to the rear of the third axis line P3. If the round bar 75 hooks the tape C2 passing between the round bar 75 and the outer peripheral surface of the upper roller 12 and moves from the standby position to the actuation position, the end portion of the tape C2 on the downstream side in the feed direction can be moved further to the downstream side in the tape feed direction than the pressure bonding point A. Thus, the bonding device 1 can improve the efficiency of the tape arrangement operation.

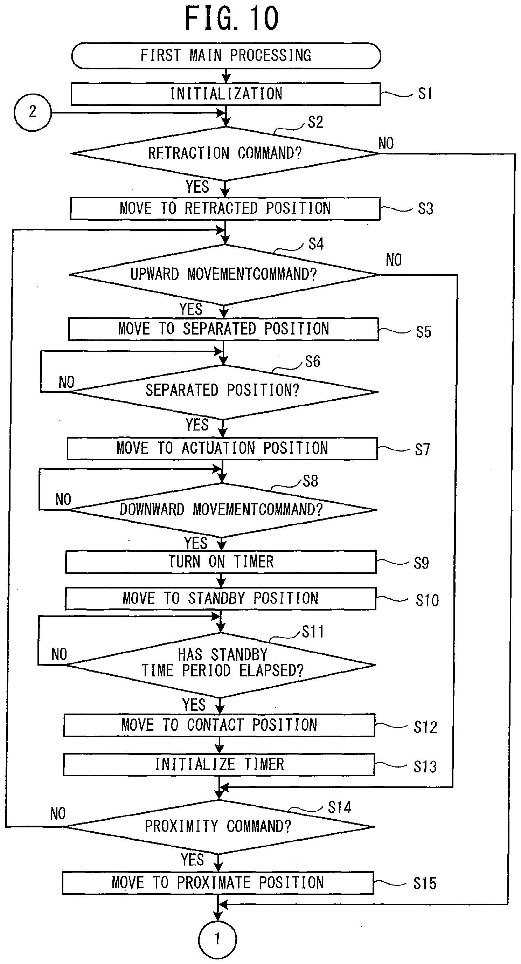

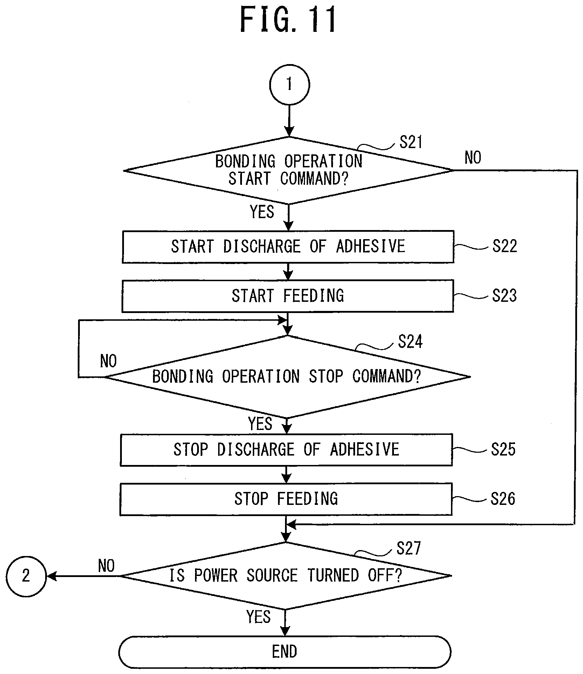

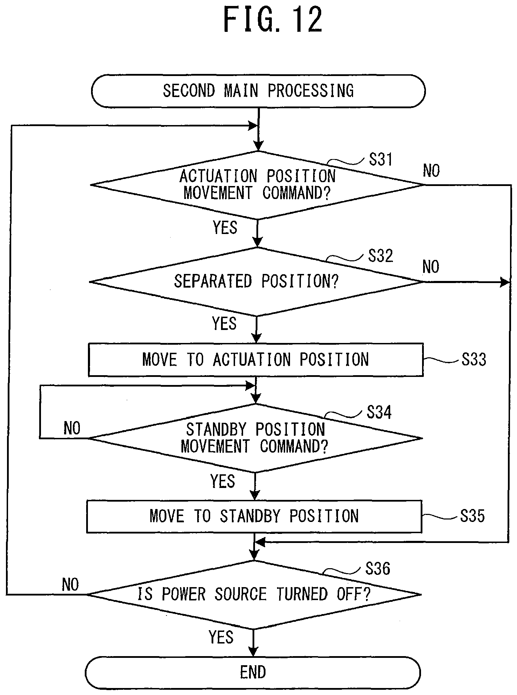

An electrical configuration of the bonding device 1 will be explained with reference to FIG. 9. The bonding device 1 includes the control unit 80. The control unit 80 is connected to the command switch 11, the actuation switch 92, the pedal 8, the sensor 12A, the operation panel 28, the pump motor 20, the upper feed motor 22, the lower feed motor 38, the first air cylinder 31, the second air cylinder 27, and the rotary cylinder 73. The control unit 80 includes the CPU 81, a ROM 82, a RAM 83, a storage device 84, a timer 85, a panel driver 86, a motor driver 87, and an air driver 88. The CPU 81 performs overall control of the operations of the bonding device 1. The ROM 82 stores programs etc. to perform various types of processing, such as first main processing (refer to FIG. 10 and FIG. 11), second main processing (refer to FIG. 12), and the like. The RAM 83 temporarily stores various types of information. The storage device 84 is a non-volatile storage device and stores various setting values and the like. The timer 85 measures time based on a command from the CPU 81.

The panel driver 86 is connected to the operation panel 28, and performs drive control of the liquid crystal display portion of the operation panel 28. The panel driver 86 receives information input from various switches of the operation panel 28. Based on a command from the CPU 81, the motor driver 87 performs drive control of the pump motor 20, the upper feed motor 22, and the lower feed motor 38. Based on a command from the CPU 81, the air driver 88 controls the supply of air to the first air cylinder 31, the second air cylinder 27, and the rotary cylinder 73.

First main processing that is performed by the CPU 81 in the first embodiment will be explained with reference to FIG. 10 and FIG. 11. When the user turns on a power source switch and activates the bonding device 1, the CPU 81 reads the program from the ROM 82 and performs the first main processing. It is assumed that the rotating shaft portion 73A is in the second position (refer to FIG. 7) when the execution of the first main processing is started.

The CPU 81 performs initialization (step S1). More specifically, the CPU 81 initializes various parameters necessary to perform the processing and adjusts the temperature of the heaters to a set temperature. The set temperature is a temperature set by the user using the operation panel 28 and stored in the storage device 84. The initialization includes processing to return the bonding device 1 to an original position. The original position is a position of the bonding device 1 when the nozzle 10, the upper roller 12, and the round bar 75 are respectively located in the proximate position, the contact position, and the standby position (refer to FIG. 2).

The CPU 81 determines whether there is a retraction command (step S2). The retraction command is a command to swing the lever 9 forward to move the nozzle 10 to the retracted position (refer to FIG. 4). When the CPU 81 detects that the command switch 11 has been pressed, the CPU 81 determines that there is the retraction command. When there is no retraction command (no at step S2), the CPU 81 advances the processing to step S21 (refer to FIG. 11). For example, when the user performs the cloth arrangement operation or the tape arrangement operation, the user may press the command switch 11 in order to move the nozzle 10 to the retracted position before moving the upper roller 12 to the separated position (refer to FIG. 4). When there is the retraction command (yes at step S2), the CPU 81 drives the second air cylinder 27 to swing the lever 9 forward. Thus, the CPU 81 moves the nozzle 10 to the retracted position (step S3). The nozzle 10 separates significantly from the upper roller 12 in the forward direction.

In a state in which the nozzle 10 is in the retracted position, the CPU 81 determines whether there is an upward movement command (step S4). The upward movement command is a command to swing the leading end side of the upper feed arm 6 upward to move the upper roller 12 to the separated position. When the CPU 81 detects that the pedal 8 has been depressed back in the direction of the user's heel, the CPU 81 determines that there is the upward movement command. When there is no upward movement command (no at step S4), the CPU 81 advances the processing to step S14. For example, when the user performs the cloth arrangement operation or the tape arrangement operation, the user may press the pedal 8 back in the direction of the user's heel in order to move the upper roller 12 to the separated position. When there is the upward movement command (yes at step S4), the CPU 81 drives the first air cylinder 31 to swing the upper feed arm 6 upward. Thus, the CPU 81 moves the upper roller 12 to the separated position (step S5). The upper roller 12 separates upward from the lower roller 18.

The CPU 81 determines whether the upper roller 12 is in the separated position (step S6). When the CPU 81 detects the on signal from the sensor 12A, the CPU 81 determines that the upper roller 12 is in the separated position. When the upper roller 12 is not in the separated position (no at step S6), the CPU 81 repeats the processing at step S6 until the on signal from the sensor 12A is detected. When the upper roller 12 is in the separated position (yes at step S6), the CPU 81 drives the rotary cylinder 73 to swing the support arm portion 74 in the clockwise direction as seen from the left side around the rotating shaft portion 73A, thus moving the round bar 75 to the actuation position (refer to FIG. 7) (step S7). The bonding device 1 does not move the round bar 75 to the actuation position while the upper roller 12 is moving to the separated position. Thus, the bonding device 1 can inhibit the round bar 75 from coming into contact with the lower roller 18.

When the cloth arrangement operation is performed, there is a case in which the tape C2 has already been located in the tape arrangement position, such as when the tape C2 used in the previous tape bonding process is used this time by the user in the tape bonding process. When the tape C2 is in the tape arrangement position, the round bar 75 may move to the actuation position. Thus, the end portion of the tape C2 on the downstream side in the tape feed direction may be held by being clamped between the round bar 75 and the outer peripheral surface of the upper roller 12. The user may perform the cloth arrangement operation in this state. Therefore, it is not necessary for the user to perform the cloth arrangement operation while holding the end portion of the tape C2. The user can easily perform the cloth arrangement operation. When the cloth arrangement operation is performed, the bonding device 1 can inhibit a hand of the user or the cloth C1 from becoming entangled with the tape C2. Thus, the bonding device 1 can inhibit the end portion of the tape C2 on the downstream side in the tape feed direction from moving further to the upstream side in the tape feed direction than the pressure bonding point A, and thus can improve efficiency of the cloth arrangement operation and the tape arrangement operation.

When the round bar 75 is in the actuation position, the CPU 81 determines whether there is a downward movement command (step S8). The downward movement command is a command to swing the leading end side of the upper feed arm 6 downward to move the upper roller 12 to the contact position (refer to FIG. 5). After the user has performed the cloth arrangement operation and the tape arrangement operation, the user may input the downward movement command to move the upper roller 12 to the contact position. In order to move the upper roller 12 to the contact position, the user may stop the depression of the pedal 8 back in the direction of the user's heel and returns the pedal 8 to the original position. When the CPU 81 detects that the depression of the pedal 8 back in the direction of the user's heel has been stopped, the CPU 81 determines that there is the downward movement command. Until it is determined that there is the downward movement command (no at step S8), the CPU 81 repeats the processing at step S8. When there is the downward movement command (yes at step S8), the CPU 81 turns on the timer 85 in order to measure a standby time period (step S9). The standby time period is a time period from when the CPU 81 detects the stopping of the depression of the pedal 8 back in the direction of the user's heel to when the movement of the upper roller 12 to the contact position is started. It is preferable that the standby time period be at least longer than a time period required for the round bar 75 to move from the actuation position to the standby position.

When the tape C2 is held by the round bar 75 in the actuation position and the upper roller 12, the bonding device 1 cannot perform the bonding operation. Thus, before the movement of the upper roller 12 to the contact position is started, it is necessary for the bonding device 1 to move the round bar 75 to the standby position (refer to FIG. 7). The bonding device 1 moves the round bar 75 to the standby position before the standby time period has elapsed. When the CPU 81 detects the stopping of the depression of the pedal 8 back in the direction of the user's heel at step S8, the CPU 81 drives the rotary cylinder 73 to swing the support arm portion 74 in the counterclockwise direction as seen from the left side around the rotating shaft portion 73A, thus moving the round bar 75 to the standby position (step S10).

The CPU 81 refers to the timer 85 and determines whether the standby time period has elapsed (step S11). Until the standby time period has elapsed (no at step S11), the CPU 81 repeats the processing at step S11. When the standby time period has elapsed (yes at step S11), the CPU 81 drives the first air cylinder 31 to swing the upper feed arm 6 downward, thus moving the upper roller 12 to the contact position (step S12). When the standby time period is at least longer than the time period required for the round bar 75 to move from the actuation position to the standby position, the bonding device 1 can move the upper roller 12 to the contact position after the round bar 75 has completely moved to the standby position. The bonding device 1 does not move the upper roller 12 to the contact position while the round bar 75 is moving to the standby position. Thus, the bonding device 1 can inhibit the round bar 75 from coming into contact with the lower roller 18. When the upper roller 12 and the lower roller 18 are in the contact position, the upper roller 12 and the lower roller 18 clamp the cloth C1 and the tape C2 at the pressure bonding point A. The CPU 81 initializes the timer 85 (step S13).

When the upper roller 12 is in the contact position, the CPU 81 determines whether there is a proximity command (step S14). The proximity command is a command to swing the lever 9 rearward to move the nozzle 10 to the proximate position (refer to FIG. 5). When the CPU 81 detects the press of the command switch 11, the CPU 81 determines that there is the proximity command. When there is no proximity command (no at step S14), the CPU 81 returns the processing to step S4. For example, when the cloth arrangement operation and the tape arrangement operation are complete, in order to move the nozzle 10 to the proximate position, the user may press the command switch 11 after the upper roller 12 has moved to the contact position. When there is the proximity command (yes at step S14), the CPU 81 drives the second air cylinder 27 to swing the lever 9 rearward, thus moving the nozzle 10 to the proximate position (step S15).

As shown in FIG. 11, the CPU 81 determines whether there is a bonding operation start command (step S21). The bonding operation start command is a command to start the bonding operation. When the CPU 81 detects that the pedal 8 has been depressed in the direction of the user's toe, the CPU 81 determines that there is the bonding operation start command. When there is no bonding operation start command (no at step S21), the CPU 81 advances the processing to step S27. In order to start the bonding operation that bonds the cloth C1 and the tape C2, the user may depress the pedal 8 in the direction of the user's toe. When there is the bonding operation start command (yes at step S21), the CPU 81 drives the pump motor 20 and thus starts the discharge of the adhesive from the discharge outlet 65 (step S22). The CPU 81 rotates the upper roller 12 in the clockwise direction as seen from the left side by driving the upper feed motor 22, and rotates the lower roller 18 in the counterclockwise direction as seen from the left side by driving the lower feed motor 38. Thus, the CPU 81 starts the feeding of the cloth C1 and the tape C2 (step S23). The bonding device 1 thus starts the bonding operation.

The CPU 81 determines whether there is a bonding operation stop command (step S24). The bonding operation stop command is a command to stop the bonding operation. When the CPU 81 detects the stopping of the depression of the pedal 8 in the direction of the user's toe, the CPU 81 determines that there is the bonding operation stop command. Until it is determined that there is the bonding operation stop command (no at step S24), the CPU 81 repeats the processing at step S24, and continues to perform the bonding operation. In order to stop the bonding operation, the user may stop the depression of the pedal 8 in the direction of the user's toe and return the pedal 8 to the original position. When there is the bonding operation stop command (yes at step S24), the CPU 81 stops the discharge of the adhesive from the discharge outlet 65 (step S25), and stops the feeding of the cloth C1 and the tape C2 (step S26). The bonding device 1 stops the bonding operation. After the bonding operation has been stopped, the user may cut the tape C2 on the downstream side in the tape feed direction relative to the pressure bonding point A. When the tape C2 used this time in the tape bonding process is used again in the next tape bonding process, the user can use the cut tape C2 as it is.

The CPU 81 determines whether the power source switch has been turned off (step S27). When the power source switch continues to be on (no at step S27), the CPU 81 returns the processing to step S2 (refer to FIG. 10) and repeats the processing. When the power source switch is turned off (yes at step S27), the CPU 81 ends the first main processing.

Second main processing, which is performed by the CPU 81, will be explained with reference to FIG. 12. When the user turns on the power source switch and activates the bonding device 1, the CPU 81 reads the program from the ROM 82 and performs the second main processing. The CPU 81 performs the second main processing in parallel with the first main processing (refer to FIG. 10 and FIG. 11). It is assumed that the rotating shaft portion 73A is in the second position (refer to FIG. 7) when the execution of the second main processing is started.

The CPU 81 determines whether there is an actuation position movement command (step S31). The actuation position movement command is a command to swing the support arm portion 74 in the clockwise direction as seen from the left side to move the round bar 75 to the actuation position. Hereinafter, if not otherwise specified, the clockwise direction and the counterclockwise direction indicate directions as seen from the left side. When the CPU 81 detects the press of the actuation switch 92, the CPU 81 determines that there is the actuation position movement command. When there is no actuation position movement command (no at step S31), the CPU 81 advances the processing to step S36. When the user performs the cloth arrangement operation in a state in which the tape C2 is in the tape arrangement position, the user may press the actuation switch 92 in order to move the round bar 75 to the actuation position and to hold the tape C2 by the round bar 75 and the upper roller 12. When there is the actuation position movement command (yes at step S31), the CPU 81 determines whether or not the upper roller 12 is in the separated position (step S32).

When the CPU 81 detects the on signal from the sensor 12A, the CPU 81 determines that the upper roller 12 is in the separated position. When the upper roller 12 is not in the separated position (no at step S32), the CPU 81 advances the processing to step S36. When the upper roller 12 is in the separated position (yes at step S32), the CPU 81 drives the rotary cylinder 73 to swing the support arm portion 74 in the clockwise direction around the rotating shaft portion 73A, thus moving the round bar 75 to the actuation position (step S33).

When the round bar 75 is in the actuation position, the CPU 81 determines whether there is a standby position movement command (step S34). The standby position movement command is a command to swing the support arm portion 74 in the counterclockwise direction to move the round bar 75 to the standby position. When the CPU 81 detects the press of the actuation switch 92, the CPU 81 determines that there is the standby position movement command. Until it is determined that there is the standby position movement command (no at step S34), the CPU 81 repeats the processing at step S34. For example, when the tape arrangement operation and the cloth arrangement operation are complete, the user may press the actuation switch 92 once again in order to move the round bar 75 to the standby position. When there is the standby position movement command (yes at step S34), the CPU 81 drives the rotary cylinder 73 to swing the support arm portion 74 in the counterclockwise direction around the rotating shaft portion 73A, thus moving the round bar 75 to the standby position (step S35).

The CPU 81 determines whether the power source switch is turned off (step S36). When the power source switch continues to be on (no at step S36), the CPU 81 returns the processing to step S31 and repeats the processing. When the power source switch is turned off (yes at step S36), the CPU 81 ends the second main processing.

As explained above, in the first embodiment, the round bar 75 extends in parallel to the first axis line P1 and is positioned on the opposite side to the upper roller 12 with respect to the tape C2. In a state in which the upper roller 12 is in the separated position, the rotary cylinder 73 drives the rotating shaft portion 73A and the support arm portion 74, and thus moves the round bar 75 from the standby position to the actuation position via a space between the upper roller 12 and the lower roller 18. At this time, the round bar 75 can hook the tape C2 and moves from the standby position to the actuation position. The end portion of the tape C2 on the downstream side in the feed direction can be reliably moved further to the downstream side in the tape feed direction than the pressure bonding point A. There is no need for the user to manually redo the tape arrangement operation. Thus, the bonding device 1 can improve the efficiency of the tape arrangement operation.

The bonding device 1 swings the support arm portion 74 around the rotating shaft portion 73A by driving the rotary cylinder 73. Simply by providing the bonding device 1 with the rotating shaft portion 73A and the support arm portion 74 as a support portion for the round bar 75, the bonding device 1 can support the round bar 75 such that the round bar 75 can move between the standby position and the actuation position. In this manner, the bonding device 1 can move the round bar 75 between the standby position and the actuation position with a simple structure.

When the rotating shaft portion 73A is in the first position, the round bar 75 can move between the standby position and the actuation position along the shape of the outer peripheral surface of the upper roller 12. By moving the round bar 75 between the standby position and the actuation position, the bonding device 1 can cause the tape C2 hooked on the round bar 75 to extend along the outer peripheral surface of the upper roller 12. Therefore, the cloth C1 arranged in the cloth arrangement position and the tape C2 hooked on the round bar 75 do not interfere with each other, and the bonding device 1 can move the end portion of the tape C2 on the downstream side in the feed direction, further to the downstream side in the tape feed direction than the pressure bonding point A.

The distance D1 is smaller than the sum of the distance D3 and the distance D2. The distance D1 is a distance between the third axis line P3 and the position, of the outer peripheral surface of the round bar 75, closest to the third axis line P3. The distance D3 is a distance between the first axis line P1 and the third axis line P3. The distance D2 is a distance between the center of rotation (the first axis line PI) of the upper roller 12 and the outer peripheral surface of the upper roller 12. Therefore, when the round bar 75 is in the actuation position, the round bar 75 can be in contact with the upper roller 12 on the downstream side of the pressure bonding point A in the tape feed direction. When the tape C2 is in the tape arrangement position, the end portion of the tape C2 on the downstream side in the tape feed direction can be held by being clamped between the round bar 75 and the upper roller 12 on the downstream side, in the feed direction, of the pressure bonding point A. Thus, the bonding device 1 can inhibit the end portion of the tape C2 on the downstream side in the tape feed direction from moving from the downstream side to the upstream side in the tape feed direction with respect to the pressure bonding point A.

When the pair of screws 72A and 72B are loosened, the holding plate 71 can move along the major axis direction (the front-rear direction) of the pair of holes 71A and 71B with respect to the left surface 6A. By changing the fixing position of the holding plate 71 with respect to the left surface 6A, the bonding device 1 can switch the rotating shaft portion 73A between the first position and the second position. Thus, depending on a purpose of the user, the bonding device 1 can switch the rotating shaft portion 73A between the first position and the second position.

When the bonding device 1 receives the upward movement command, the bonding device 1 moves the upper roller 12 to the separated position, and thereafter moves the round bar 75 from the standby position to the actuation position. In a state in which the tape C2 is clamped between the round bar 75 in the actuation position and the upper roller 12, the user may arrange the cloth C1 in the cloth arrangement position. Before bonding the tape C2 onto the cloth C1, the user may input the downward movement command in order to move the upper roller 12 to the contact position. When the bonding device 1 receives the downward movement command, the bonding device 1 moves the round bar 75 from the actuation position to the standby position before moving the upper roller 12 from the separated position to the contact position. In a state in which the tape C2 is arranged in the tape arrangement position, the bonding device 1 moves the upper roller 12 from the separated position to the contact position. Thus, when the user arranges the cloth C1 in the cloth arrangement position, the bonding device 1 can inhibit the end portion of the tape C2 on the downstream side in the tape feed direction from moving from the downstream side to the upstream side in the feed direction with respect to the pressure bonding point A.

When the bonding device 1 receives the actuation position movement command in a state in which the upper roller 12 is in the separated position, the bonding device 1 can move the round bar 75 from the standby position to the actuation position. After moving the round bar 75 to the actuation position, when the bonding device 1 receives the standby position movement command in a state in which the upper roller 12 is in the separated position, the bonding device 1 can move the round bar 75 from the actuation position to the standby position. Thus, the bonding device 1 can move the round bar 75 between the standby position and the actuation position at a timing desired by the user in accordance with the command.

For example, when the cloth C1 is the tubular object, the user may arrange the cloth C1 in the cloth arrangement position by causing the lower feed arm 7 to pass through the inside of the tubular cloth C1 from the downstream side in the cloth feed direction. The lower feed arm 7 extends upward in the direction in which it is inclined toward the downstream side in the cloth feed direction. The user can easily cause the lower feed arm 7 to pass through the tubular cloth C1, and the bonding device 1 makes it possible to easily perform the cloth arrangement operation.

In the above explanation, the tape C2 corresponds to a first sheet of the present invention. The cloth C1 corresponds to a second sheet of the present invention. The round bar 75 corresponds to a movable member of the present invention. The rotary cylinder 73 corresponds to a drive portion of the present invention. The distance D2 corresponds to a distance between a center of rotation of an upper roller and an outer peripheral surface of the upper roller of the present invention. The distance D3 corresponds to a distance between a first axis line and a third axis line of the present invention. The upper feed arm 6 corresponds to an upper roller support member of the present invention. The holding plate 71 and the pair of screws 72A and 72B correspond to a holding portion of the present invention. The pair of holes 71A and 71B correspond to a position change portion of the present invention. The pedal 8 and the actuation switch 92 correspond to a reception portion of the present invention. The CPU 81 that performs the processing at step S12 in FIG. 10 corresponds to a downward movement control portion of the present invention. The CPU 81 that performs the processing at step S5 corresponds to an upward movement control portion of the present invention. The CPU 81 that performs the processing at step S7 and step S33 in FIG. 12 corresponds to a first movement control portion of the present invention. The CPU 81 that performs the processing at step S10 corresponds to a third movement control portion of the present invention. The actuation position movement command corresponds to a first movement command of the present invention. The standby position movement command corresponds to a second movement command of the present invention. The CPU 81 that performs the processing at step S35 in FIG. 12 corresponds to a fourth movement control portion of the present invention. The lower feed arm 7 corresponds to a lower roller support member of the present invention.

The present invention is not limited to the first embodiment and various changes can be made. In the first embodiment, the sensor 12A is a proximity switch. However, a sensor capable of detecting that the upper roller 12 is in the separated position, such as an optical sensor or the like, may be used as the sensor 12A. The bonding device 1 need not necessarily include the sensor 12A. In this case, it is sufficient if the CPU 81 refers to the timer 85 in the processing at step S6 and determines whether a specified time period has elapsed from when the upward movement command has been input. It is preferable that the specified time period be at least longer than a time period required for the upper roller 12 to move from the contact position to the separated position. When the specified time period has elapsed from when the upward movement command has been input, the CPU 81 may perform the processing at step S7. More specifically, the CPU 81 may swing the support arm portion 74 in the clockwise direction around the rotating shaft portion 73A by driving the rotary cylinder 73, and thus may move the round bar 75 to the actuation position. When the specified time period is at least longer than the time period required for the upper roller 12 to move from the contact position to the separation position, the bonding device 1 can move the round bar 75 to the actuation position after the upper roller 12 has completely moved to the separated position. The bonding device 1 does not move the round bar 75 to the actuation position while the upper roller 12 is moving to the separated position. Therefore, the bonding device 1 can inhibit the round bar 75 from coming into contact with the lower roller 18.

In the first embodiment, the CPU 81 receives the retraction command and the proximity command by detecting the press of the command switch 11. The CPU 81 may receive the retraction command and the proximity command by detecting an operation of the operation panel 28, for example. In the first embodiment, the CPU 81 receives the upward movement command and the downward movement command, respectively, by detecting the depression of the pedal 8 back in the direction of the user's heel and the stopping of the depression of the pedal 8 back in the direction of the user's heel. The CPU 81 may receive the upward movement command and the downward movement command by detecting an operation of the operation panel 28, for example. In the first embodiment, the CPU 81 receives the standby position movement command and the actuation position movement command, respectively, by detecting the press of the actuation switch 92. The CPU 81 may receive the standby position movement command and the actuation position movement command by detecting an operation of the operation panel 28, for example.

In the first embodiment, the CPU 81 receives the bonding operation start command and the bonding operation stop command, by detecting the depression of the pedal 8 in the direction of the user's toe and the stopping of the depression of the pedal 8 in the direction of the user's toe. The bonding device 1 may receive the bonding operation start command and the bonding operation stop command by, for example, providing a start/stop switch on the right side of the command switch 11 and detecting the press of the start/stop switch.

In the first embodiment, instead of the timer 85, the bonding device 1 may include a sensor that can detect that the round bar 75 is in the standby position. The sensor may be, for example, a proximity switch, an optical sensor or the like and may be connected to the CPU 81. In this case, when the CPU 81 determines at step S8 that there is the downward movement command, the bonding device 1 can move the upper roller 12 to the contact position after using the sensor to detect that the round bar 75 has moved to the standby position. The bonding device 1 does not move the upper roller 12 to the contact position while moving the round bar 75 to the standby position. Thus, the bonding device 1 can inhibit the round bar 75 from coming into contact with the lower roller 18.

In the first embodiment, the CPU 81 need not necessarily perform the processing at step S6, step S7, step S9 to step S11 and step S13. In this case, when the bonding device 1 receives the actuation position movement command in a state in which the upper roller 12 is in the separated position, the bonding device 1 can move the round bar 75 from the standby position to the actuation position. After moving the round bar 75 to the actuation position, when the bonding device 1 receives the standby position movement command in the state in which the upper roller 12 is in the separated position, the bonding device 1 can move the round bar 75 from the actuation position to the standby position. Therefore, the bonding device 1 can move the round bar 75 between the standby position and the actuation position at a timing desired by the user in accordance with the command.

In the first embodiment, the bonding device 1 need not necessarily include the actuation switch 92. In this case, the CPU 81 need not necessarily perform the second main processing. Thus, the bonding device 1 can suppress an increase in the capacity of the ROM 82 and an increase in the processing load of the CPU 81.

Hereinafter, the bonding device 1 according to a second embodiment of the present invention will be explained. The bonding device 1 of the second embodiment is different from the bonding device 1 of the first embodiment in that the bonding device 1 performs third main processing instead of the first main processing. The ROM 82 of the second embodiment stores a program to perform the third main processing, instead of the program to perform the first main processing. The structure of the bonding device 1, the feed paths R1 and R2, the second main processing, and the like of the second embodiment are the same as those of the first embodiment, and an explanation thereof is omitted here.

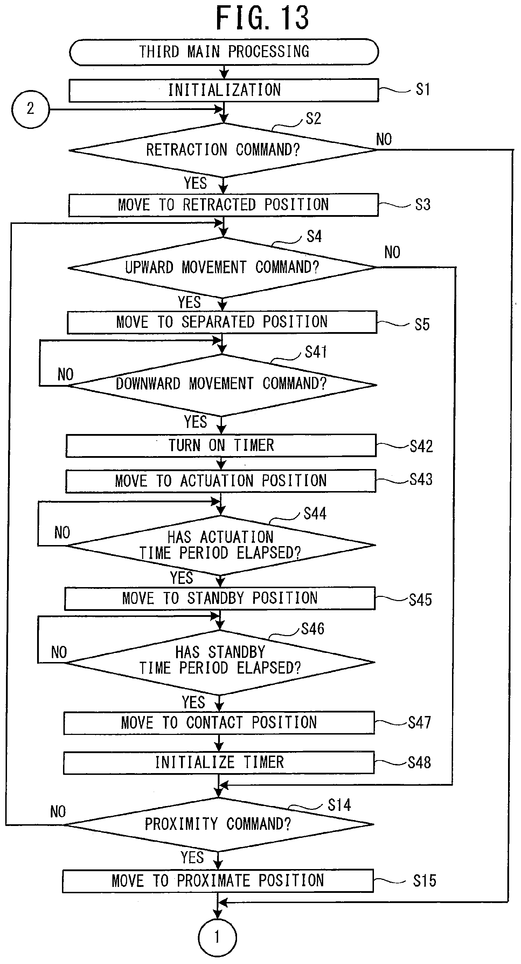

The third main processing that is performed by the CPU 81 in the second embodiment will be explained with reference to FIG. 13. In the third main processing, the CPU 81 performs processing at step S41 to step S48 instead of the processing at step S6 to step S13 of the first main processing. Therefore, in the explanation of the third main processing, the same flow as the first main processing is denoted by the same reference numeral and an explanation thereof will be simplified. When the user turns on the power source switch and activates the bonding device 1, the CPU 81 reads the program from the ROM 82 and performs the third main processing. When the execution of the third main processing is started, it is assumed that the rotating shaft portion 73A is in the first position (refer to FIG. 8).

The CPU 81 performs the initialization (step S1), and when there is the retraction command (yes at step S2), the CPU 81 moves the nozzle 10 to the retracted position (step S3). When there is the upward movement command in a state in which the nozzle 10 is in the retracted position (yes at step S4), the CPU 81 moves the upper roller 12 to the separated position (step S5). The user may perform the cloth arrangement operation in a state in which the upper roller 12 is in the separated position. The CPU 81 determines whether there is the downward movement command (step S41). Until it is determined that there is the downward movement command (no at step S41), the CPU 81 repeats the processing at step S41. For example, when the cloth arrangement operation is complete, in order to move the upper roller 12 to the contact position before moving the nozzle 10 to the proximate position (refer to FIG. 5), the user may stop the depression of the pedal 8 back in the direction of the user's heel and returns the pedal 8 to the original position. When there is the downward movement command (yes at step S41), the CPU 81 turns on the timer 85 in order to measure an actuation time period and the standby time period (step S42). The actuation time period is a time period from when the CPU 81 detects the stopping of the depression of the pedal 8 back in the direction of the user's heel to when the CPU 81 starts the movement of the round bar 75 to the standby position. It is preferable that the actuation time period be at least longer than a time period required for the round bar 75 to move from the standby position to the actuation position.

The CPU 81 drives the rotary cylinder 73 to swing the support arm portion 74 in the clockwise direction around the rotating shaft portion 73A, thus moving the round bar 75 to the actuation position (step S43). When the cloth arrangement operation is performed, there is a case in which the tape C2 has already been located in the tape arrangement position, such as when the tape C2 used in the previous tape bonding process is used this time by the user in the tape bonding process. In this case, a hand of the user or the cloth C1 may become entangled with the tape C2, and the end portion of the tape C2 on the downstream side in the tape feed direction may move further to the upstream side in the tape feed direction than the pressure bonding point A (refer to FIG. 8). In this case, if the round bar 75 moves to the actuation position, the end portion on the downstream side in the tape feed direction of the tape C2 located in the tape arrangement position can be moved further to the downstream side in the tape feed direction than the pressure bonding point A. When the bonding device 1 receives the downward movement command, the bonding device 1 moves the round bar 75 to the actuation position. Thus, it is not necessary for the user to manually redo the tape arrangement operation. The bonding device 1 can improve the efficiency of the cloth arrangement operation and the tape arrangement operation.

The CPU 81 refers to the timer 85 and determines whether the actuation time period has elapsed (step S44). Until the actuation time period has elapsed (no at step S44), the CPU 81 repeats the processing at step S44. When the actuation time period has elapsed (yes at step S44), the CPU 81 drives the rotary cylinder 73 to swing the support arm portion 74 in the counterclockwise direction around the rotating shaft portion 73A, thus moving the round bar 75 to the standby position (step S45). When the actuation time period is at least longer than the time period required for the round bar 75 to move from the standby position to the actuation position, the bonding device 1 can move the round bar 75 to the standby position after moving the round bar 75 completely to the actuation position.

The CPU 81 refers to the timer 85 and determines whether the standby time period has elapsed (step S46). Until the standby time period has elapsed (no at step S46), the CPU 81 repeats the processing at step S46. When the standby time period has elapsed (yes at step S46), the CPU 81 drives the first air cylinder 31 to swing the upper feed arm 6 downward, thus moving the upper roller 12 to the contact position (step S47). The standby time period is at least longer than the time period required for the round bar 75 to move from the actuation position to the standby position. The bonding device 1 can move the upper roller 12 to the contact position after moving the round bar 75 to the standby position. The upper roller 12 and the lower roller 18 clamp the cloth C1 and the tape C2 at the pressure bonding point A. The bonding device 1 of the second embodiment moves the round bar 75 from the standby position via the actuation position to the standby position while moving the upper roller 12 from the separated position to the contact position. Thus, the bonding device 1 can reliably arrange the tape C2 in the tape arrangement position before performing the bonding operation.

The CPU 81 initializes the timer 85 (step S48). The CPU 81 determines whether there is the proximity command (step S14). When there is no proximity command (no at step S14), the CPU 81 returns the processing to step S4. When there is the proximity command (yes at step S14), the CPU 81 performs the bonding operation by performing the processing at step S15 and step S21 to step S27 (refer to FIG. 11).

As explained above, in the second embodiment, when the bonding device 1 receives the proximate position movement command, before moving the upper roller 12 from the separated position to the contact position, the bonding device 1 moves the round bar 75 from the standby position via the actuation position to the standby position. At this time, the round bar 75 hooks the tape C2 and arranges the end portion of the tape C2 on the downstream side in the feed direction, further to the downstream side in the tape feed direction than the pressure bonding point A. Thus, the bonding device 1 can reliably perform the tape arrangement operation.

In the above explanation, the CPU 81 that performs the processing at step S47 in FIG. 13 corresponds to the downward movement control portion of the present invention. The CPU 81 that performs the processing at step S43 corresponds to the first movement control portion of the present invention. The CPU 81 that performs the processing at step S45 corresponds to a second movement control portion of the present invention.

The present invention is not limited to the second embodiment and various changes can be made. In the second embodiment, the bonding device 1 may further include a sensor that can detect that the round bar 75 is in the actuation position. The sensor may be, for example, a proximity switch, an optical sensor, or the like and may be connected to the CPU 81. In this case, when there is the downward movement command at step S41, the CPU 81 can move the round bar 75 to the standby position after the sensor has detected that the round bar 75 has moved to the actuation position. Thus, when there is the downward movement command, the bonding device 1 can move the round bar 75 from the standby position, reliably via the actuation position, to the standby position.

In the second embodiment, the CPU 81 performs the third main processing in a state in which the rotating shaft portion 73A is in the first position. The CPU 81 may perform the third main processing in a state in which the rotating shaft portion 73A is in the second position.

In the second embodiment, the CPU 81 need not necessarily perform the processing at step S42 to step S46 and step S48. In this case, when the bonding device 1 receives the actuation position movement command in a state in which the upper roller 12 is in the separated position, the bonding device 1 can move the round bar 75 from the standby position to the actuation position. After moving the round bar 75 to the actuation position, when the bonding device 1 receives the standby position movement command in the state in which the upper roller 12 is in the separated position, the bonding device 1 can move the round bar 75 from the actuation position to the standby position. Thus, the bonding device 1 can move the round bar 75 between the standby position and the actuation position at a timing desired by the user in accordance with the command.

In the second embodiment, the bonding device 1 may include a sensor that can detect whether the rotating shaft portion 73A is in the first position or the second position. The sensor is connected to the CPU 81. In this case, the ROM 82 may store both the program to perform the first main processing and the program to perform the third main processing. When the CPU 81 detects the depression of the pedal 8 back in the direction of the user's heel and determines that there is the upward movement command, the CPU 81 determines whether the rotating shaft portion 73A is in the first position or the second position based on the sensor. In this case, the CPU 81 can determine which of the first main processing and the third main processing is to be performed, in accordance with the position of the rotating shaft portion 73A. When the CPU 81 determines that the rotating shaft portion 73A is in the second position, the CPU 81 performs the first main processing. When the CPU 81 determines that the rotating shaft portion 73A is in the first position, the CPU 81 performs the third main processing. Thus, the bonding device 1 can move the round bar 75 between the standby position and the actuation position at an appropriate timing.

In addition to the above-described changes, changes similar to those of the bonding device 1 of the first embodiment can be made to the bonding device 1 of the second embodiment.

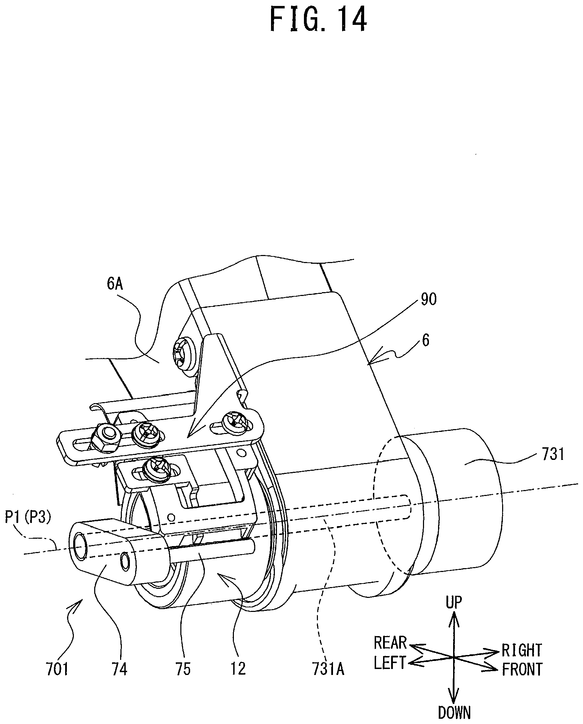

In the above-described embodiments, the bonding device 1 may include, for example, a movement mechanism 701 instead of the movement mechanism 700. The movement mechanism 701 according to a modified example will be explained with reference to FIG. 14. In the explanation below, members that are the same as those of the first embodiment are denoted by the same reference numerals as those of the first embodiment, and an explanation thereof will be omitted.

The movement mechanism 701 includes a rotary cylinder 731, a rotating shaft portion 731A, the support arm portion 74, and the round bar 75. The rotary cylinder 731 is fixed to a right surface of the leading end portion of the upper feed arm 6. The rotating shaft portion 731A is a drive shaft of the rotary cylinder 731. The rotating shaft portion 731A protrudes to the left from a hole provided in the upper roller 12. The hole extends along the first axis line P1 and penetrates the upper roller 12. The rotating shaft portion 731A and the rotating shaft of the upper roller 12 can rotate independently from each other. The third axis line P3 is aligned with the first axis line P1. The third axis line P3 is an axis line of the rotating shaft portion 731A. The rotary cylinder 731 includes an air inlet that is connected to the intake/exhaust hose. The bonding device 1 controls the intake and exhaust of compressed air from the intake/exhaust hose to the air inlet. The rotary cylinder 731 drives the support arm portion 74 in accordance with the intake and exhaust of the compressed air.

One end portion of the support arm portion 74 is coupled to the rotating shaft portion 731A, and the other end portion is coupled to the round bar 75. When the support arm portion 74 is driven by the rotary cylinder 731, the support arm portion 74 can swing within a specified swing range in the counterclockwise direction and the clockwise direction as seen from the left side around the rotating shaft portion 731A. When the support arm portion 74 swings around the rotating shaft portion 731A, the round bar 75 moves along the periphery of the outer peripheral surface of the upper roller 12 between the standby position and the actuation position. For example, when the user performs the cloth arrangement operation, the tape arrangement operation, or the like, the user may perform the operation from the left side of the bonding device 1. In the present modified example, the rotating shaft portion 731A penetrates the upper feed arm 6 and the upper roller 12, and thus the rotary cylinder 731 can be fixed to the right surface of the upper feed arm 6. There is no need for the bonding device 1 to be provided with a plurality of members on the left side of the upper roller 12. Therefore, it is easy for the user to visually check the vicinity of the upper roller 12, and the user can easily perform the cloth arrangement operation, the tape arrangement operation, or the like.

In the above-described embodiments, the cloth C1 is the tubular object. The cloth C1 may have, for example, a long length or a planar shape. The user may perform the cloth arrangement operation by arranging the cloth C1 in the cloth arrangement position from the upstream side in the cloth feed direction with respect to the pressure bonding point A. The bonding device 1 need not necessarily be provided with the tape supply source. The discharge outlet 65 may be opposed to the outer peripheral surface of the lower roller 18, with a specified clearance between the discharge outlet 65 and the outer peripheral surface of the lower roller 18, on the upstream side in the tape feed direction relative to the pressure bonding point A. The discharge outlet 65 may discharge the adhesive toward a bonding surface on the opposite side to the lower roller 18 side of the cloth C1 that moves along the feed path R1.

In the above-described embodiments, the pair of holes 71A and 71B each have a substantially elliptical shape that is long in the front-rear direction. The pair of holes 71A and 71B may have a circular shape having substantially the same diameter as that of the screws 72A and 72B. In other words, the bonding device 1 need not necessarily be capable of changing the fixing position of the holding plate 71 with respect to the left surface 6A. In this case, the rotating shaft portion 73A is fixed to one of the first position and the second position. The holding plate 71 may only be provided with one of the pair of holes 71A and 71B, or may be provided with three or more holes. It is sufficient if the bonding device 1 is provided with screws and projecting pins and the number of the screws and the number of the projecting pins are each the same as that of the holes provided in the holding plate 71. The holding plate 71 of the bonding device 1 may be provided with a pair of holes corresponding to a case when the rotating shaft portion 73A is in the first position, and a pair of holes corresponding to a case when the rotating shaft portion 73A is in the second position.

In the above-described embodiments, the holding plate 71 and the rotary cylinder 73 are provided on the left side in the vicinity of the leading end portion of the upper feed arm 6. However, the holding plate 71 and the rotary cylinder 73 may be provided in another position. For example, the holding plate 71 and the rotary cylinder 73 may be provided inside the head 5, or may be provided on the base end portion of the upper feed arm 6. In this case, the bonding device 1 need not necessarily be provided with a plurality of members in the vicinity of the pressure bonding point A. Thus, it is easy for the user to visually check the vicinity of the upper roller 12, and the user can easily perform the cloth arrangement operation and the tape arrangement operation.

In the above-described embodiments, the movement mechanism 700 includes the round bar 75. However, the movement mechanism 700 may include a member other than the round bar 75 as long as the member extends in parallel to the first axis line P1. The movement mechanism 700 may include, for example, a plate-like member or a cuboid member.

In the above-described embodiments, although the support arm portion 74 can swing around the rotating shaft portion 73A, the support arm portion 74 may be linearly movable in the front-rear direction. It is sufficient if the movement mechanism 700 includes, for example, a guide rail extending in the front-rear direction. In this case, as the support arm portion 74 moves in the front-rear direction along the guide rail, the round bar 75 can move between the standby position and the actuation position. In this case, the guide rail corresponds to a support portion of the present invention.

The movement mechanism 700 need not necessarily include the rotary cylinder 73, and may include a motor, a solenoid, or the like. For example, when the movement mechanism 700 includes a motor instead of the rotary cylinder 73, the bonding device 1 can change the swing range of the support arm portion 74 simply by adjusting the amount of rotation of the motor. Therefore, the bonding device 1 can easily adjust the position of the round bar 75 located in the standby position or the actuation position.

In the above-described embodiments, although the rotary cylinder 73 swings the support arm portion 74 within the specified swing range, the rotary cylinder 73 may be capable of changing the swing range of the support arm portion 74. For example, if a position adjustable stopper is provided inside the rotary cylinder 73, the bonding device 1 can change the swing range of the support arm portion 74. In this case, the bonding device 1 can adjust the position of the round bar 75 located in the standby position or the actuation position.

## Claims

1. A bonding device (1) comprising:
a feed mechanism including:
an upper roller (12) disposed on an upper side of a first sheet (C2) in a position where the first sheet is overlaid on an upper surface of a second sheet (C1) via an adhesive, the upper roller being adapted to rotate around a first axis line extending in a direction orthogonal to a feed direction of the first sheet and the second sheet; and
a lower roller (18) disposed on a lower side of the second sheet, the lower roller being opposed to the upper roller, and the lower roller being adapted to rotate around a second axis line extending in parallel to the first axis line,
wherein
the feed mechanism is adapted to feed the first sheet and the second sheet while pressure-bonding the first sheet to the second sheet at a pressure bonding point (A), the pressure bonding point being a point at which the upper roller and the lower roller can be in contact with each other,
the upper roller is adapted to move between a contact position and a separated position, the contact position being a position at which the upper roller can be in contact with the lower roller, and the separated position being a position at which the upper roller is separated above from the contact position, and
the bonding device further comprises:
a movable member (75) extending in parallel to the first axis line, and the movable member being positioned on an opposite side to the upper roller with respect to the first sheet;
a support portion adapted to support the movable member such that the movable member is movable between a standby position and an actuation position, the standby position being on an upstream side in the feed direction with respect to the pressure bonding point, and the actuation position being on a downstream side in the feed direction with respect to the pressure bonding point;
a drive portion (73) adapted to, in a state in which the upper roller is in the separated position, drive the support portion to move the movable member to the standby position and the actuation position via a space between the upper roller and the lower roller; and
a first movement control portion adapted to control the drive portion to move the movable member from the standby position to the actuation position such that an end portion of the first sheet on the downstream side in the feed direction is arranged on the downstream side in the feed direction with respect to the pressure bonding point.

2. The bonding device according to claim 1, wherein
the support portion includes:
a rotating shaft portion (73A, 731A) coupled to the drive portion, and the rotating shaft portion being adapted to rotate around a third axis line by the drive of the drive portion, and the third axis line extending in parallel to the first axis line; and
a support arm portion (74) extending orthogonally to the first axis line, one end portion of the support arm portion being coupled to the rotating shaft portion, and another end portion of the support arm portion being coupled to the movable member,
a distance between the one end portion and the other end portion of the support arm portion is larger than a distance between a center of rotation of the upper roller and an outer peripheral surface of the upper roller, and
the movable member is adapted to move along a periphery of the upper roller when the support arm portion swings around the rotating shaft portion.

3. The bonding device according to claim 2, wherein
the rotating shaft portion is in a first position in which the third axis line is aligned with the first axis line.

4. The bonding device according to claim 2, wherein
the rotating shaft portion is in a second position in which the third axis line is on the upstream side in the feed direction with respect to the first axis line, and
the distance between the one end portion and the other end portion of the support arm portion is smaller than a sum of a distance between the first axis line and the third axis line and the distance between the center of rotation of the upper roller and the outer peripheral surface of the upper roller.

5. The bonding device according to claim 4, wherein
the feed mechanism includes an upper roller support member (6) adapted to rotatably support the upper roller,
the bonding device further comprises:
a holding portion (71, 72A, 72B) holding the support portion, the holding portion being fixed to the upper roller support member; and
a position change portion (71A, 71B) adapted to change a fixing position of the holding portion with respect to the upper roller support member, and
the position change portion is adapted to change the fixing position of the holding portion such that the rotating shaft portion is movable between a first position and the second position, the first position being a position in which the third axis line is aligned with the first axis line.

6. The bonding device according to claim 3, further comprising:
a reception portion (8, 92) adapted to receive a downward movement command to move the upper roller from the separated position to the contact position; and
a downward movement control portion adapted to control the upper roller to move from the separated position to the contact position when the reception portion receives the downward movement command,
wherein
the first movement control portion is adapted to, when the reception portion receives the downward movement command, control the drive portion to move the movable member from the standby position to the actuation position before the downward movement control portion causes the upper roller to move, and
the bonding device further comprises a second movement control portion adapted to control the drive portion to move the movable member from the actuation position to the standby position after the first movement control portion has caused the movable member to move to the actuation position.

7. The bonding device according to claim 4, further comprising:
a reception portion adapted to receive a downward movement command and an upward movement command, the downward movement command being a command to move the upper roller from the separated position to the contact position, and the upward movement command being a command to move the upper roller from the contact position to the separated position;
a downward movement control portion adapted to control the upper roller to move from the separated position to the contact position when the reception portion receives the downward movement command; and
an upward movement control portion adapted to control the upper roller to move from the contact position to the separated position when the reception portion receives the upward movement command,
wherein
the first movement control portion is adapted to control the drive portion to move the movable member from the standby position to the actuation position after the upward movement control portion has caused the upper roller to move, and
the bonding device further comprises a third movement control portion adapted to, when the reception portion receives the downward movement command after the first movement control portion has caused the movable member to move to the actuation position, control the drive portion to move the movable member from the actuation position to the standby position before the downward movement control portion causes the upper roller to move.

8. The bonding device according to any one of claims 1 to 5, further comprising:
a reception portion adapted to receive a first movement command and a second movement command, the first movement command being a command to move the movable member from the standby position to the actuation position, and the second movement command being a command to move the movable member from the actuation position to the standby position,
wherein
the first movement control portion is adapted to control the drive portion to move the movable member from the standby position to the actuation position when the reception portion receives the first movement command in the state in which the upper roller is in the separated position, and
the bonding device further comprises a fourth movement control portion adapted to control the drive portion to move the movable member from the actuation position to the standby position when the reception portion receives the second movement command in the state in which the upper roller is in the separated position, after the first movement control portion has caused the movable member to move to the actuation position.

9. The bonding device according to either one of claims 6 and 7, wherein
the reception portion is adapted to receive a first movement command and a second movement command, the first movement command being a command to move the movable member from the standby position to the actuation position, and the second movement command being a command to move the movable member from the actuation position to the standby position,
the first movement control portion is adapted to control the drive portion to move the movable member from the standby position to the actuation position when the reception portion receives the first movement command in the state in which the upper roller is in the separated position, and
the bonding device further comprises a fourth movement control portion adapted to control the drive portion to move the movable member from the actuation position to the standby position when the reception portion receives the second movement command in the state in which the upper roller is in the separated position, after the first movement control portion has caused the movable member to move to the actuation position.

10. The bonding device according to any one of claims 1 to 9, wherein
the feed mechanism includes a lower roller support member (7) extending upward from a lower portion of the lower roller support member in a direction inclined toward the downstream side in the feed direction, an upper end portion of the lower roller support member being adapted to support the lower roller.

## Patentansprüche

1. Klebevorrichtung (1), die Folgendes umfasst:
einen Vorschubmechanismus der Folgendes umfasst:
eine obere Rolle (12), die an einer oberen Seite einer ersten Bahn (C2) in einer Position angeordnet ist, in der die erste Bahn mittels Klebstoff auf eine obere Oberfläche einer zweiten Bahn (C1) gelegt wird, wobei die obere Rolle dafür ausgelegt ist, sich um eine erste Achsenlinie zu drehen, die sich in einer Richtung orthogonal zu einer Zufuhrrichtung der ersten Bahn und der zweiten Bahn erstreckt; und
eine untere Rolle (18), die an einer unteren Seite der zweiten Bahn angeordnet ist, wobei die untere Rolle der oberen Rolle gegenüberliegt und die untere Rolle dafür ausgelegt ist, sich um eine zweite Achsenlinie zu drehen, die sich parallel zur ersten Achsenlinie erstreckt,
wobei
der Zufuhrmechanismus dafür ausgelegt ist, die erste Bahn und die zweite Bahn zuzuführen, während die erste Bahn an einem Druckklebepunkt (A) mit der zweiten Bahn druckverbunden wird, wobei der Druckklebepunkt ein Punkt ist, an dem die obere Rolle und die untere Rolle in Kontakt miteinander sein können,
die obere Rolle dafür ausgelegt ist, sich zwischen einer Kontaktposition und einer getrennten Position zu bewegen, wobei die Kontaktposition eine Position ist, an der die obere Rolle mit der unteren Rolle in Kontakt sein kann, und die getrennte Position eine Position ist, bei der die obere Rolle von der Kontaktposition getrennt ist, und
die Klebevorrichtung ferner Folgendes umfasst:
ein bewegliches Element (75), das sich parallel zu der ersten Achsenlinie erstreckt, wobei das bewegliche Element auf einer gegenüberliegenden Seite der oberen Rolle in Bezug auf die erste Bahn angeordnet ist;
einen Stützabschnitt, der dafür ausgelegt ist, das bewegliche Element zu tragen, so dass das bewegliche Element zwischen einer Bereitschaftsposition und einer Betätigungsposition beweglich ist, wobei sich die Bereitschaftsposition auf einer stromaufwärtigen Seite in Zufuhrrichtung in Bezug auf den Druckklebepunkt befindet und die sich Betätigungsposition auf einer stromabwärtigen Seite in Zufuhrrichtung in Bezug auf den Druckklebepunkt befindet;
einen Antriebsabschnitt (73), der dafür ausgelegt ist, in einem Zustand, in dem sich die obere Rolle in der getrennten Position befindet, den Stützabschnitt anzutreiben, um das bewegliche Element in die Bereitschaftsposition und die Betätigungsposition über einen Raum zwischen der oberen Rolle und der unteren Rolle zu bewegen; und
einen ersten Bewegungssteuerabschnitt, der dafür ausgelegt ist, den Antriebsabschnitt zu steuern, um das bewegliche Element von der Bereitschaftsposition zu der Betätigungsposition zu bewegen, so dass ein Endabschnitt der ersten Bahn auf der stromabwärtigen Seite in Zufuhrrichtung auf der stromabwärtigen Seite in Zufuhrrichtung in Bezug auf den Druckklebepunkt angeordnet ist.

2. Klebevorrichtung nach Anspruch 1, wobei
der Stützabschnitt Folgendes umfasst:
einen Drehwellenabschnitt (73A, 731A), der mit dem Antriebsabschnitt verbunden ist, wobei der Drehwellenabschnitt dafür ausgelegt ist, sich um eine dritte Achsenlinie durch den Antrieb des Antriebsabschnitts zu drehen, wobei sich die dritte Achsenlinie parallel zu der ersten Achsenlinie erstreckt; und
einen Tragarmabschnitt (74), der sich orthogonal zur ersten Achsenlinie erstreckt, wobei ein Endabschnitt des Tragarmabschnitts mit dem Drehwellenabschnitt verbunden ist und ein anderer Endabschnitt des Tragarmabschnitts mit dem beweglichen Element verbunden ist,
wobei ein Abstand zwischen dem einen Endabschnitt und dem anderen Endabschnitt des Tragarmabschnitts größer ist als ein Abstand zwischen einem Rotationszentrum der oberen Rolle und einer äußeren Umfangsfläche der oberen Rolle, und
wobei das bewegliche Element dafür ausgelegt ist, sich entlang eines Umfangs der oberen Rolle zu bewegen, wenn der Tragarmabschnitt um den Drehwellenabschnitt schwingt.

3. Klebevorrichtung nach Anspruch 2, wobei
sich der Drehwellenabschnitt in einer ersten Position befindet, in der die dritte Achsenlinie mit der ersten Achsenlinie ausgerichtet ist.

4. Klebevorrichtung nach Anspruch 2, wobei
sich der Drehwellenabschnitt in einer zweiten Position befindet, in der die dritte Achsenlinie auf der stromaufwärtigen Seite in Vorschubrichtung in Bezug auf die erste Achsenlinie befindet, und
der Abstand zwischen dem einen Endabschnitt und dem anderen Endabschnitt des Tragarmabschnitts kleiner ist als eine Summe eines Abstands zwischen der ersten Achsenlinie und der dritten Achsenlinie und des Abstands zwischen dem Rotationszentrum der oberen Rolle und der äußeren Umfangsfläche der oberen Rolle.

5. Klebevorrichtung nach Anspruch 4, wobei
der Vorschubmechanismus ein oberes Rollenstützelement (6) umfasst, das dafür ausgelegt ist, die obere Rolle drehbar zu lagern,
wobei die Klebevorrichtung ferner Folgendes umfasst:
einen Halteabschnitt (71, 72A, 72B), der den Stützabschnitt hält, wobei der Halteabschnitt an dem oberen Rollenstützelement befestigt ist; und
einen Positionsänderungsabschnitt (71A, 71B), der dafür ausgelegt ist, eine Fixierposition des Halteabschnitts in Bezug auf das obere Rollenstützelement zu ändern, und
wobei der Positionsänderungsabschnitt dafür ausgelegt ist, die Fixierposition des Halteabschnitts zu ändern, so dass der Drehwellenabschnitt zwischen einer ersten Position und der zweiten Position beweglich ist, wobei die erste Position eine Position ist, in der die dritte Achsenlinie mit der ersten Achsenlinie ausgerichtet ist.

6. Klebevorrichtung nach Anspruch 3, die ferner Folgendes umfasst:
einen Aufnahmeabschnitt (8, 92), der dafür ausgelegt ist, einen Abwärtsbewegungsbefehl zu empfangen, um die obere Rolle von der getrennten Position zu der Kontaktposition zu bewegen; und
einen Abwärtsbewegungssteuerabschnitt, der dafür ausgelegt ist, die obere Rolle so zu steuern, dass sie sich von der getrennten Position zu der Kontaktposition bewegt, wenn der Empfangsabschnitt den Abwärtsbewegungsbefehl empfängt,
wobei
der erste Bewegungssteuerabschnitt dafür ausgelegt ist, wenn der Empfangsabschnitt den Abwärtsbewegungsbefehl empfängt, den Antriebsabschnitt so steuern, dass er das bewegliche Element von der Bereitschaftsposition in die Betätigungsposition bewegt, bevor der Abwärtsbewegungssteuerabschnitt die obere Rolle bewegt, und
die Klebevorrichtung ferner einen zweiten Bewegungssteuerabschnitt umfasst, der dafür ausgelegt ist, den Antriebsabschnitt so zu steuern, dass er das bewegliche Element von der Betätigungsposition in die Bereitschaftsposition bewegt, nachdem der erste Bewegungssteuerabschnitt das bewegliche Element veranlasst hat, sich in die Betätigungsposition zu bewegen.

7. Klebevorrichtung nach Anspruch 4, die ferner Folgendes umfasst:
einen Empfangsabschnitt, der dafür ausgelegt ist, einen Abwärtsbewegungsbefehl und einen Aufwärtsbewegungsbefehl zu empfangen, wobei der Abwärtsbewegungsbefehl ein Befehl zum Bewegen der oberen Rolle von der getrennten Position zu der Kontaktposition ist und der Aufwärtsbewegungsbefehl ein Befehl zum Bewegen der oberen Rolle von der Kontaktposition zu der getrennten Position ist;
einen Abwärtsbewegungssteuerabschnitt, der dafür ausgelegt ist, die obere Rolle so zu steuern, dass sie sich von der getrennten Position in die Kontaktposition bewegt, wenn der Empfangsabschnitt den Abwärtsbewegungsbefehl empfängt; und
einen Aufwärtsbewegungssteuerabschnitt, der dafür ausgelegt ist, die obere Rolle so zu steuern, dass sie sich von der Kontaktposition zu der getrennten Position bewegt, wenn der Empfangsabschnitt den Aufwärtsbewegungsbefehl empfängt,
wobei
der erste Bewegungssteuerabschnitt dafür ausgelegt ist, den Antriebsabschnitt zu steuern, um das bewegliche Element von der Bereitschaftsposition zu der Betätigungsposition zu bewegen, nachdem der Aufwärtsbewegungssteuerabschnitt die obere Rolle bewegt hat, und
die Klebevorrichtung ferner einen dritten Bewegungssteuerabschnitt umfasst, der dafür ausgelegt ist, wenn der Empfangsabschnitt den Abwärtsbewegungsbefehl empfängt, nachdem der erste Bewegungssteuerabschnitt das bewegliche Element veranlasst hat, sich in die Betätigungsposition zu bewegen, den Antriebsabschnitt so steuern, dass er das bewegliche Element von der Betätigungsposition in die Bereitschaftsposition bewegt, bevor der Abwärtsbewegungssteuerabschnitt die obere Rolle bewegt.

8. Klebevorrichtung nach einem der Ansprüche 1 bis 5, die ferner Folgendes umfasst:
einen Empfangsabschnitt, der dafür ausgelegt ist, einen ersten Bewegungsbefehl und einen zweiten Bewegungsbefehl zu empfangen, wobei der erste Bewegungsbefehl ein Befehl zum Bewegen des beweglichen Elements von der Bereitschaftsposition in die Betätigungsposition ist und wobei der zweite Bewegungsbefehl ein Befehl zum Bewegen des beweglichen Elements von der Betätigungsposition in die Bereitschaftsposition ist,
wobei
der erste Bewegungssteuerabschnitt dafür ausgelegt ist, den Antriebsabschnitt zu steuern, um das bewegliche Element von der Bereitschaftsposition zu der Betätigungsposition zu bewegen, wenn der Empfangsabschnitt den ersten Bewegungsbefehl in dem Zustand empfängt, in dem sich die obere Rolle in der getrennten Position befindet, und
die Klebevorrichtung ferner einen vierten Bewegungssteuerabschnitt umfasst, der dafür ausgelegt ist, den Antriebsabschnitt zu steuern, um das bewegliche Element von der Betätigungsposition in die Bereitschaftsposition zu bewegen, wenn der Empfangsabschnitt den zweiten Bewegungsbefehl in dem Zustand empfängt, in dem sich die obere Rolle in der getrennten Position befindet, nachdem der erste Bewegungssteuerabschnitt das bewegliche Element veranlasst hat, sich in die Betätigungsposition zu bewegen.

9. Klebevorrichtung nach einem der Ansprüche 6 und 7, wobei
der Empfangsabschnitt dafür ausgelegt ist, einen ersten Bewegungsbefehl und einen zweiten Bewegungsbefehl zu empfangen, wobei der erste Bewegungsbefehl ein Befehl zum Bewegen des beweglichen Elements von der Bereitschaftsposition in die Betätigungsposition ist und wobei der zweite Bewegungsbefehl ein Befehl zum Bewegen des beweglichen Elements von der Betätigungsposition in die Bereitschaftsposition ist,
der erste Bewegungssteuerabschnitt dafür ausgelegt ist, den Antriebsabschnitt so zu steuern, dass er das bewegliche Element von der Bereitschaftsposition in die Betätigungsposition bewegt, wenn der Empfangsabschnitt den ersten Bewegungsbefehl in dem Zustand empfängt, in dem sich die obere Rolle in der getrennten Position befindet, und
die Klebevorrichtung ferner einen vierten Bewegungssteuerabschnitt umfasst, der dafür ausgelegt ist, den Antriebsabschnitt so zu steuern, dass er das bewegliche Element von der Betätigungsposition in die Bereitschaftsposition bewegt, wenn der Empfangsabschnitt den zweiten Bewegungsbefehl in dem Zustand empfängt, in dem sich die obere Rolle in der getrennten Position befindet, nachdem der erste Bewegungssteuerabschnitt das bewegliche Element veranlasst hat, sich in die Betätigungsposition zu bewegen.

10. Klebevorrichtung nach einem der Ansprüche 1 bis 9, wobei
der Zufuhrmechanismus ein unteres Rollenstützelement (7) umfasst, das sich von einem unteren Abschnitt des unteren Rollenstützelements nach oben in einer Richtung erstreckt, die zur stromabwärtigen Seite in der Zufuhrrichtung geneigt ist, wobei ein oberer Endabschnitt des unteren Rollenstützelements dafür ausgelegt ist, die untere Rolle zu stützen.

## Revendications

1. Dispositif de liaison (1), comprenant :
un mécanisme d'alimentation incluant :
un rouleau supérieur (12) disposé sur un côté supérieur d'une première feuille (C2) dans une position où la première feuille est superposée sur une surface supérieure d'une seconde feuille (C1) par l'intermédiaire d'un adhésif, le rouleau supérieur étant adapté pour tourner autour d'une première ligne axiale s'étendant dans une direction orthogonale à une direction d'alimentation de la première feuille et de la seconde feuille ; et
un rouleau inférieur (18) disposé sur un côté inférieur de la seconde feuille, le rouleau inférieur étant opposé au rouleau supérieur, et le rouleau inférieur étant adapté pour tourner autour d'une deuxième ligne axiale s'étendant en parallèle à la première ligne axiale,
dans lequel
le mécanisme d'alimentation est adapté pour fournir la première feuille et la seconde feuille tout en liant sous pression la première feuille à la seconde feuille à un point de liaison sous pression (A), le point de liaison sous pression étant un point auquel le rouleau supérieur et le rouleau inférieur peuvent être en contact l'un avec l'autre,
le rouleau supérieur est adapté pour se déplacer entre une position de contact et une position séparée, la position de contact étant une position à laquelle le rouleau supérieur peut être en contact avec le rouleau inférieur, et la position séparée étant une position à laquelle le rouleau supérieur est séparé, au-dessus, de la position de contact, et
le dispositif de liaison comprend en outre :
un élément mobile (75) s'étendant en parallèle à la première ligne axiale, et l'élément mobile étant positionné sur un côté opposé au rouleau supérieur par rapport à la première feuille ;
une portion de support adaptée pour supporter l'élément mobile de telle sorte que l'élément mobile soit mobile entre une position d'attente et une position d'actionnement, la position d'attente étant sur un côté amont dans la direction d'alimentation par rapport au point de liaison sous pression, et la position d'actionnement étant sur un côté aval dans la direction d'alimentation par rapport au point de liaison sous pression ;
une portion d'entraînement (73) adaptée pour, dans un état où le rouleau supérieur est dans la position séparée, entraîner la portion de support pour déplacer l'élément mobile vers la position d'attente et la position d'actionnement par l'intermédiaire d'un espace entre le rouleau supérieur et le rouleau inférieur ; et
une première portion de commande de mouvement adaptée pour commander la portion d'entraînement pour déplacer l'élément mobile de la position d'attente à la position d'actionnement de telle sorte qu'une portion d'extrémité de la première feuille sur le côté aval dans la direction d'alimentation soit agencée sur le côté aval dans la direction d'alimentation par rapport au point de liaison sous pression.

2. Dispositif de liaison selon la revendication 1, dans lequel
la portion de support inclut :
une portion arbre rotative (73A, 731A) accouplée à la portion d'entraînement, et la portion arbre rotative étant adaptée pour tourner autour d'une troisième ligne axiale par l'entraînement de la portion d'entraînement, et la troisième ligne axiale s'étendant en parallèle à la première ligne axiale ; et
une portion bras de support (74) s'étendant orthogonalement à la première ligne axiale, une portion d'extrémité de la portion bras de support étant accouplée à la portion arbre rotative, et une autre portion d'extrémité de la portion bras de support étant accouplée à l'élément mobile,
une distance entre l'une portion d'extrémité et l'autre portion d'extrémité de la portion bras de support est supérieure à une distance entre un centre de rotation du rouleau supérieur et une surface périphérique extérieure du rouleau supérieur, et
l'élément mobile est adapté pour se déplacer le long d'une périphérie du rouleau supérieur lorsque la portion bras de support pivote autour de la portion arbre rotative.

3. Dispositif de liaison selon la revendication 2, dans lequel
la portion arbre rotative est dans une première position dans laquelle la troisième ligne axiale est alignée avec la première ligne axiale.

4. Dispositif de liaison selon la revendication 2, dans lequel
la portion arbre rotative est dans une seconde position dans laquelle la troisième ligne axiale est sur le côté amont dans la direction d'alimentation par rapport à la première ligne axiale, et
la distance entre l'une portion d'extrémité et l'autre portion d'extrémité de la portion bras de support est inférieure à une somme d'une distance entre la première ligne axiale et la troisième ligne axiale et de la distance entre le centre de rotation du rouleau supérieur et la surface périphérique extérieure du rouleau supérieur.

5. Dispositif de liaison selon la revendication 4, dans lequel
le mécanisme d'alimentation inclut un élément de support de rouleau supérieur (6) adapté pour supporter de façon rotative le rouleau supérieur,
le dispositif de liaison comprend en outre :
une portion de retenue (71, 72A, 72B) retenant la portion de support, la portion de retenue étant fixée à l'élément de support de rouleau supérieur ; et
une portion de changement de position (71A, 71B) adaptée pour changer une position de fixation de la portion de retenue par rapport à l'élément de support de rouleau supérieur, et la portion de changement de position est adaptée pour changer la position de fixation de la portion de retenue de telle sorte que la portion arbre rotative soit mobile entre une première position et la seconde position, la première position étant une position dans laquelle la troisième ligne axiale est alignée avec la première ligne axiale.

6. Dispositif de liaison selon la revendication 3, comprenant en outre :
une portion de réception (8, 92) adaptée pour recevoir une instruction de mouvement descendant pour déplacer le rouleau supérieur de la position séparée à la position de contact ; et
une portion de commande de mouvement descendant adaptée pour commander le rouleau supérieur pour se déplacer de la position séparée à la position de contact lorsque la portion de réception reçoit l'instruction de mouvement descendant,
dans lequel
la première portion de commande de mouvement est adaptée pour, lorsque la portion de réception reçoit l'instruction de mouvement descendant, commander la portion d'entraînement pour déplacer l'élément mobile de la position d'attente à la position d'actionnement avant que la portion de commande de mouvement descendant force le rouleau supérieur à se déplacer, et
le dispositif de liaison comprend en outre une deuxième portion de commande de mouvement adaptée pour commander la portion d'entraînement pour déplacer l'élément mobile de la position d'actionnement à la position d'attente après que la première portion de commande de mouvement a forcé l'élément mobile à se déplacer vers la position d'actionnement.

7. Dispositif de liaison selon la revendication 4, comprenant en outre :
une portion de réception adaptée pour recevoir une instruction de mouvement descendant et une instruction de mouvement ascendant, l'instruction de mouvement descendant étant une instruction pour déplacer le rouleau supérieur de la position séparée à la position de contact, et l'instruction de mouvement ascendant étant une instruction pour déplacer le rouleau supérieur de la position de contact à la position séparée ;
une portion de commande de mouvement descendant adaptée pour commander le rouleau supérieur pour se déplacer de la position séparée à la position de contact lorsque la portion de réception reçoit l'instruction de mouvement descendant ; et
une portion de commande de mouvement ascendant adaptée pour commander le rouleau supérieur pour se déplacer de la position de contact à la position séparée lorsque la portion de réception reçoit l'instruction de mouvement ascendant,
dans lequel
la première portion de commande de mouvement est adaptée pour commander la portion d'entraînement pour déplacer l'élément mobile de la position d'attente à la position d'actionnement après que la portion de commande de mouvement ascendant a forcé le rouleau supérieur à se déplacer, et
le dispositif de liaison comprend en outre une troisième portion de commande de mouvement adaptée pour, lorsque la portion de réception reçoit l'instruction de mouvement descendant après que la première portion de commande de mouvement a forcé l'élément mobile à se déplacer vers la position d'actionnement, commander la portion d'entraînement pour déplacer l'élément mobile de la position d'actionnement à la position d'attente avant que la portion de commande de mouvement descendant force le rouleau supérieur à se déplacer.

8. Dispositif de liaison selon l'une quelconque des revendications 1 à 5, comprenant en outre :
une portion de réception adaptée pour recevoir une première instruction de mouvement et une seconde instruction de mouvement, la première instruction de mouvement étant une instruction pour déplacer l'élément mobile de la position d'attente à la position d'actionnement, et la seconde instruction de mouvement étant une instruction pour déplacer l'élément mobile de la position d'actionnement à la position d'attente,
dans lequel
la première portion de commande de mouvement est adaptée pour commander la portion d'entraînement pour déplacer l'élément mobile de la position d'attente à la position d'actionnement lorsque la portion de réception reçoit la première instruction de mouvement dans l'état où le rouleau supérieur est dans la position séparée, et
le dispositif de liaison comprend en outre une quatrième portion de commande de mouvement adaptée pour commander la portion d'entraînement pour déplacer l'élément mobile de la position d'actionnement à la position d'attente lorsque la portion de réception reçoit la seconde instruction de mouvement dans l'état où le rouleau supérieur est dans la position séparée, après que la première portion de commande de mouvement a forcé l'élément mobile à se déplacer vers la position d'actionnement.

9. Dispositif de liaison selon l'une ou l'autre des revendications 6 et 7, dans lequel
la portion de réception est adaptée pour recevoir une première instruction de mouvement et une seconde instruction de mouvement, la première instruction de mouvement étant une instruction pour déplacer l'élément mobile de la position d'attente à la position d'actionnement, et la seconde instruction de mouvement étant une instruction pour déplacer l'élément mobile de la position d'actionnement à la position d'attente,
la première portion de commande de mouvement est adaptée pour commander la portion d'entraînement pour déplacer l'élément mobile de la position d'attente à la position d'actionnement lorsque la portion de réception reçoit la première instruction de mouvement dans l'état où le rouleau supérieur est dans la position séparée, et
le dispositif de liaison comprend en outre une quatrième portion de commande de mouvement adaptée pour commander la portion d'entraînement pour déplacer l'élément mobile de la position d'actionnement à la position d'attente lorsque la portion de réception reçoit la seconde instruction de mouvement dans l'état où le rouleau supérieur est dans la position séparée, après que la première portion de commande de mouvement a forcé l'élément mobile à se déplacer vers la position d'actionnement.

10. Dispositif de liaison selon l'une quelconque des revendications 1 à 9, dans lequel
le mécanisme d'alimentation inclut un élément de support de rouleau inférieur (7) s'étendant vers le haut à partir d'une portion inférieure de l'élément de support de rouleau inférieur dans une direction inclinée vers le côté aval dans la direction d'alimentation, une portion d'extrémité supérieure de l'élément de support de rouleau inférieur étant adaptée pour supporter le rouleau inférieur.
